(19) Europäisches Patentamt
European Patent Office
Office européen des brevets

(11) **EP 4 447 431 A1**

(12) **EUROPEAN PATENT APPLICATION**
published in accordance with Art. 153(4) EPC

(43) Date of publication:
**16.10.2024 Bulletin 2024/42**

(21) Application number: **22903856.7**

(22) Date of filing: **13.10.2022**

(51) International Patent Classification (IPC):
***H04N 5/74*** (2006.01)

(52) Cooperative Patent Classification (CPC):
**H04N 5/74**

(86) International application number:
**PCT/JP2022/038284**

(87) International publication number:
**WO 2023/105922 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021 JP 2021198563**

(71) Applicant: **Sony Group Corporation
Tokyo 108-0075 (JP)**

(72) Inventors:
• **MIYAO, Masa**
  **Tokyo 108-0075 (JP)**
• **IKEDA, Tetsuo**
  **Tokyo 108-0075 (JP)**
• **TAKAYAMA, Yuya**
  **Tokyo 108-0075 (JP)**
• **HAYASHI, Maho**
  **Tokyo 108-0075 (JP)**
• **YONEZAWA, Gen**
  **Tokyo 108-0075 (JP)**
• **FUJII, Keisuke**
  **Tokyo 108-0075 (JP)**
• **MIYAO, Ryo**
  **Tokyo 108-0075 (JP)**
• **MORI, Keita**
  **Tokyo 108-0075 (JP)**
• **OHKAWA, Shingo**
  **Tokyo 108-0075 (JP)**

(74) Representative: **D Young & Co LLP
3 Noble Street
London EC2V 7BQ (GB)**

(54) **PROJECTION SYSTEM, AND PROJECTION CONTROL METHOD**

(57)    Provided is a projection system using a projection device that simultaneously projects on a plurality of projection surfaces.

A projection system includes: a user recognition unit that recognizes a user existing in a space; a projection environment recognition unit that recognizes a projection surface on which a video can be projected in the space; and a control unit that controls a projection device so as to project a video on the projection surface recognized by the projection environment recognition unit for the user recognized by the user recognition unit. The projection device can simultaneously project a video on a plurality of surfaces. The control unit controls a projection device so as to simultaneously project a video on two or more projection surfaces recognized by the projection environment recognition unit.

*FIG. 1*

**Description**

TECHNICAL FIELD

The technology disclosed in the present specification (hereinafter, "the present disclosure") relates to a projection system and a projection control method for projecting an image on one or a plurality of projection surfaces.

BACKGROUND ART

A projection device also called a "projector" can project a large image on a screen and simultaneously present the image to a plurality of persons, and thus has been used for applications such as presentation for a long time. In recent years, the use of projection devices has been further expanded due to the appearance of the projection mapping technology for pasting a projected video to a three-dimensional object. For example, there has been proposed an image projection device that identifies a plurality of projection surfaces within a projection range on the basis of an imaging signal obtained by imaging the projection range of a projection unit by an imaging unit, and allocates a seed image or a UI image to each projection surface to project the image (see Patent Document 1). Such an image projection device can correct the size, luminance, and chromaticity of a video in consideration of the identified state of each projection surface.

CITATION LIST

PATENT DOCUMENT

Patent Document 1: Japanese Patent Application Laid-Open No. 2011-244044
Patent Document 2: Japanese Patent Application Laid-Open No. 2020-112674
Patent Document 3: Japanese Patent Application Laid-Open No. 2019-139308

SUMMARY OF THE INVENTION

PROBLEMS TO BE SOLVED BY THE INVENTION

An object of the present disclosure is to provide a projection system and a projection control method using a projection device capable of performing simultaneous projection on a plurality of projection surfaces.

SOLUTIONS TO PROBLEMS

The present disclosure has been made in view of the above problems, and a first aspect thereof is a projection system including:

a user recognition unit that recognizes a user existing in a space;
a projection environment recognition unit that recognizes a projection surface on which a video can be projected in the space; and
a control unit that controls a projection device so as to project a video on the projection surface recognized by the projection environment recognition unit for the user recognized by the user recognition unit.

The projection device can simultaneously project a video on a plurality of surfaces. Then, the control unit controls the projection device so as to simultaneously project the video on the two or more projection surfaces recognized by the projection environment recognition unit.
However, the term "system" referred here indicates a logical assembly of multiple of devices (or functional modules that implement specific functions), and it does not matter whether or not each of the devices or functional modules is in a single housing. That is, one device including multiple components or functional modules and an assembly of multiple devices correspond to the "system".
At least one of the user recognition unit or the projection environment recognition unit performs recognition on the basis of sensor information detected by a sensor installed in the space.
The projection device includes a phase modulation type spatial light modulator, and can simultaneously project a video on a plurality of surfaces different in vertical and horizontal directions and a depth direction. Therefore, the projection environment recognition unit recognizes a plurality of projection surfaces different in the vertical and horizontal directions and the depth direction.

The user recognition unit defines a characteristic and a state of the user. Furthermore, the projection system according to the first aspect further includes: a content selection unit that selects content to be displayed to a user on the basis of defined user information; and a projection surface determination unit that determines a projection surface on which the selected content is projected.

The projection environment recognition unit detects information of the recognized projection surface such as an attribute, a shape, an area, and characteristics (reflectance, luminance, chromaticity) of the projection surface.

Furthermore, the projection system according to the first aspect further includes a projection parameter correction unit that corrects a projection parameter for the projection surface determined by the projection surface determination unit. The projection parameter correction unit limits at least one of a distance between projection surfaces different in a depth direction, the number of projection surfaces, or a projection size on the basis of a design value of the projection device, determines priorities of a plurality of the projection surfaces determined by the projection surface determination unit, and the projection parameter correction unit performs corrects luminance, chromaticity, and a size of a projected video on the projection surface.

Furthermore, a second aspect of the present disclosure is a projection control method including:

a user recognition step of recognizing a user existing in a space;
a projection environment recognition step of recognizing a projection surface on which a video can be projected in the space; and
a control step of controlling a projection device so as to project a video on the projection surface recognized by the projection environment recognition step for the user recognized by the user recognition step.

EFFECTS OF THE INVENTION

According to the present disclosure, it is possible to provide a projection system and a projection control method that project content to a user recognized in a space on the projection surfaces recognized in the space by using a projection device capable of simultaneously projecting on a plurality of projection surfaces.

Note that, effects described in the present specification are merely examples, and the effects brought about by the present disclosure are not limited thereto. Furthermore, the present disclosure may further provide additional effects in addition to the effects described above.

Still other objects, features, and advantages of the present disclosure will become apparent from a more detailed description based on embodiments as described later and the accompanying drawings.

BRIEF DESCRIPTION OF DRAWINGS

Fig. 1 is a diagram illustrating a configuration of a projection system 100.
Fig. 2 is a diagram illustrating a configuration of a projection system 200.
Fig. 3 is a diagram illustrating an example of sensor information input by an input unit 201.
Fig. 4 is a diagram illustrating another example of sensor information input by the input unit 201.
Fig. 5 is a view illustrating a projection surface detected from the sensor information illustrated in Fig. 3.
Fig. 6 is a view illustrating a projection surface detected from the sensor information illustrated in Fig. 4.
Fig. 7 is a diagram for explaining an operation of a projection device 110.
Fig. 8 is a diagram illustrating a configuration of a projection system 800.
Fig. 9 is a view illustrating an example of a recognition result (recognition result of the inside of the vehicle) by a user recognition unit 802-1.
Fig. 10 is a view illustrating another example of a recognition result (recognition result of the outside of the vehicle) by the user recognition unit 802-1.
Fig. 11 is a view illustrating an example of a user characteristic database.
Fig. 12 is a diagram illustrating a configuration of a projection system 1200.
Fig. 13 is a diagram illustrating an example of a recognition result (detection result of the inside of the vehicle) by a projection surface detection unit 1203-1.
Fig. 14 is a diagram illustrating an example of a recognition result (detection result of the outside of the vehicle) by the projection surface detection unit 1203-1.
Fig. 15 is a diagram illustrating an example of a user characteristic database that stores content and a projection surface.

Fig. 16 is a diagram illustrating a configuration of a projection system 1600.

Fig. 17 is a diagram illustrating an example of a projection surface database.

Fig. 18 is a view illustrating a projection surface database defined in the daytime.

Fig. 19 is a view illustrating a projection surface database defined at night.

Fig. 20 is a view illustrating an example in which a distance between two projection surfaces is smaller than a design value.

Fig. 21 is a view (top view) illustrating a state in which a vehicle is parked or stopped in the vicinity of a wall surface.

Fig. 22 is a view (side view) illustrating a state in which a vehicle is parked or stopped in the vicinity of a wall surface.

Fig. 23 is a diagram illustrating an example of correcting a projection light amount to each projection surface according to a prioritization rule.

Fig. 24 is a view illustrating a state in which a vehicle equipped with a projection system projects a corrected projection light amount onto a window surface of the vehicle window and a road surface while traveling in town.

Fig. 25 is a diagram illustrating a method of performing projection parameter correction according to a distance from a projection device 1610.

Fig. 26 is a view illustrating a specific example of performing projection parameter correction according to a distance from the projection device 1610.

Fig. 27 is a diagram illustrating a specific example of performing the projection parameter correction when an advertisement for the outside of the vehicle is projected from the projection system 1600 mounted on a vehicle onto a sidewalk.

Fig. 28 is a diagram illustrating a specific example of performing the projection parameter correction when an advertisement for the outside of the vehicle is projected from the projection system 1600 mounted on a vehicle onto a sidewalk.

Fig. 29 is a diagram illustrating a configuration of a projection system 2900.

Fig. 30 is a diagram illustrating a configuration example of an application information database.

Fig. 31 is a view illustrating a state in which a projection device and a sensor are installed inside a vehicle.

Fig. 32 is a diagram illustrating an example (Example 1) of a user characteristic database constructed in an application "multi-surface projection inside a vehicle".

Fig. 33A is a diagram illustrating an example (Example 2) of dish projection mapping.

Fig. 33B is a diagram illustrating an example (Example 2) of dish projection mapping.

Fig. 33C is a diagram illustrating an example (Example 2) of dish projection mapping.

Fig. 34 is a diagram illustrating an example (Example 2) of a provisional user characteristic database.

Fig. 35 is a diagram illustrating an example (Example 2) of a final user characteristic database.

Fig. 36 is a view illustrating a projection surface (Example 3) detected on a lane and a surface of a rolling ball.

Fig. 37 is a diagram illustrating a configuration example (Example 3) of a user characteristic database.

Fig. 38 is a view illustrating a projection surface (Example 3) allocated to content on a lane and a surface of a rolling ball.

Fig. 39 is a view illustrating a projection surface (Example 3) allocated to content on a lane and a surface of a rolling ball.

Fig. 40 is a diagram illustrating a CAVE system 4000.

Fig. 41 is a diagram illustrating an example (Example 4) of a user characteristic database constructed in an application "gaze region appreciation in CAVE system (coping with many people) ".

Fig. 42 is a diagram illustrating a display example of an aerial display.

Fig. 43 is a diagram illustrating a display example of a touch indicator of the aerial display.

Fig. 44 is a diagram illustrating a display example of a touch indicator of the aerial display.

Fig. 45 is a diagram for explaining an operation principle of a projection device of phase modulation scheme.

Fig. 46 is a diagram for explaining an operation principle of a projection device of phase modulation scheme.

MODE FOR CARRYING OUT THE INVENTION

Hereinafter, the present disclosure will be described in the following order with reference to the drawings.

A. Overview
B. Projection Principle
C. System Configuration
C-1. System Configuration Example (1)
C-2. System Configuration Example (2)
C-3. Projection Device Capable of Simultaneously Projecting on a Plurality of Projection Surfaces Different in Depth Direction
C-4. System Configuration Example (3)

C-5. System Configuration Example (4)
C-6. System Configuration Example (5)
C-7. Correction of Projection Parameter
C-7-1. Limitation of Projection Surface
C-7-2. Priority Determination on Projection Surface
C-7-3. Correction of Projection Surface
C-7-3-1. Geometric Correction
C-7-3-2. Luminance Correction
C-7-3-3. Chromaticity Correction
C-7-3-4. Specific Examples
C-8. Modality of Input Information
C-9. Detection of Meta Information from Device Possessed by User
D. Application
D-1. Example 1
D-2. Example 2
D-3. Example 3
D-4. Example 4
D-5. Example 5
D-6. Example 6

A. Overview

There has already been proposed a projection device that performs simultaneous projection on a plurality of projection surfaces and corrects the size, luminance, chromaticity, and the like of a video according to the state of the projection surfaces (see Patent Document 1). On the other hand, the present disclosure further proposes a projection system that includes a user recognition function of recognizing a user existing in a space and a projection environment recognition function of recognizing a projection environment of the space, and projects content on a projection surface recognized in the space to the user recognized in the space.

In a case where the projection system is mounted on a vehicle, the space includes both the inside and outside of the vehicle. Then, according to the present disclosure, it is possible to project content directed to each of a passenger and a pedestrian near the vehicle, for example, on projection surfaces recognized inside and outside the vehicle. Furthermore, the space may be an indoor space in which an immersive virtual reality (VR) system such as cave automatic virtual environment (CAVE) or Warp is constructed. Then, according to the present disclosure, content can be projected to each user in an immersive space on one or more projection surfaces recognized in the immersive space.

According to the projection system to which the present disclosure is applied, not only the user existing in the space can be recognized by the user recognition function, but also the characteristic and state of each user can be further recognized, and appropriate content can be selected in consideration of the characteristic and state of the user.

Furthermore, according to the projection system to which the present disclosure is applied, the projection surface in the space can be recognized by the projection environment recognition function, and the projection surface can be allocated to each user. At that time, the projection surface can be allocated according to the content selected for each user. Furthermore, projection parameters can be corrected in consideration of the projection environment, the characteristics of the projection surface, the image quality when the content is projected, and the like.

A projection system according to the present disclosure uses a projection device capable of simultaneously projecting on a plurality of projection surfaces. The plurality of projection surfaces means a plurality of projection surfaces different not only in the vertical and horizontal directions (in other words, projection directions) but also in the depth direction. Incidentally, the image projection device described in Patent Literature 1 can simultaneously project on two projection surfaces different in the vertical and horizontal directions, but cannot simultaneously project on a plurality of projection surfaces different in the depth direction.

According to the present disclosure, by using a projection device capable of simultaneously projecting on a plurality of projection surfaces different in the vertical and horizontal directions and in the depth direction, it is possible to realize adaptive projection control of content in consideration of both a state of a user and a projection environment, and it is possible to improve usability. In particular, since simultaneous projection can be performed on a plurality of projection surfaces including the depth direction with only one projection device, space saving is achieved, which is advantageous, for example, as an in-vehicle system. Furthermore, by concentrating the projection light of the projection device only on a necessary portion, energy efficiency and cost efficiency can be improved.

B. Projection Principle

As described above, the projection system according to the present disclosure uses a projection device capable of simultaneously projecting on a plurality of projection surfaces different in the depth direction in addition to the vertical and horizontal directions. In the present embodiment, simultaneous projection of a video on a plurality of projection surfaces different in the depth direction is realized using a light modulation element.

In general, a spatial light modumator (SLM) has only an element that can independently modulate amplitude modulation or phase modulation. In the former amplitude modulation scheme, the interference fringe intensity distribution of object light and reference light is displayed on an amplitude modulation type SLM by, for example, computer-generated hologram (CGH), and the amplitude modulation type SLM is irradiated with the reference light to generate reproduction light of an object. Although detailed description is omitted, in such amplitude modulation scheme, the object light can be reproduced as it is, but there is a problem in that a large amount of unnecessary light is generated.

On the other hand, the phase modulation also includes holography, but any light intensity can be created at any position by wavefront control of the light. In the phase modulation scheme, when the phase distribution of the object light is displayed on the phase modulation type SLM and the phase modulation type SLM is irradiated with the reference light, the wavefront of the passing light is controlled to generate the reproduction light of the object. The phase modulation scheme is more advantageous than the amplitude modulation scheme because the object light can be reproduced with high light utilization efficiency without generating unnecessary components in addition to being able to reproduce the phase of the object light correctly. As the phase modulation type SLM, a phase modulation type liquid crystal on silicon (LCOS) or a phase modulation type microelectromechanical systems (MEMS) is used. For example, Patent Literature 2 refers to a projector using an SLM. Hereinafter, a method of projecting on different projection surfaces in the depth direction using the phase modulation scheme will be described.

Object light O (x, y) on the xy plane can be expressed by an amplitude component Ao (x, y) and a phase component exp (i$\varphi_0$ (x, y)) as shown on the right side of the following formula (1). However, the xy plane is defined as a zero position in the depth direction. The zero position in the depth direction corresponds to an "SLM plane" or a "hologram plane" on which the phase modulation type SLM is installed. If the object light O (x, y) can be reproduced at the zero position in the depth direction, it is possible to freely record and reproduce light.

[Math. 1]

$$O(x,y) = A_O(x,y)exp\big(i\phi_O(x,y)\big) \qquad \cdots (1)$$

Phase distribution P (x, y) of the object light O (x, y) is as shown in the following formula (2) as can be seen from the above formula (1). In the phase modulation scheme, the phase distribution P (x, y) is displayed on a phase modulation type SLM (phase modulation type LCOS or the like) arranged at the zero position in the depth direction, and the reference light R (x, y) is multiplied, whereby reproduction light O' (x, y) of the object can be generated as shown in the following formula (3). The right side of the following formula (3) includes only the reproduction light obtained by phase-modulating the reference light R (x, y). Therefore, according to the phase modulation scheme, it can be understood that object light can be efficiently reproduced without generating unnecessary components.

[Math. 2]

$$P(x,y) = exp\big(i\phi_O(x,y)\big) \qquad \cdots (2)$$

[Math. 3]

$$O'(x,y) = R(x,y)exp\big(i\phi_O(x,y)\big) \qquad \cdots (3)$$

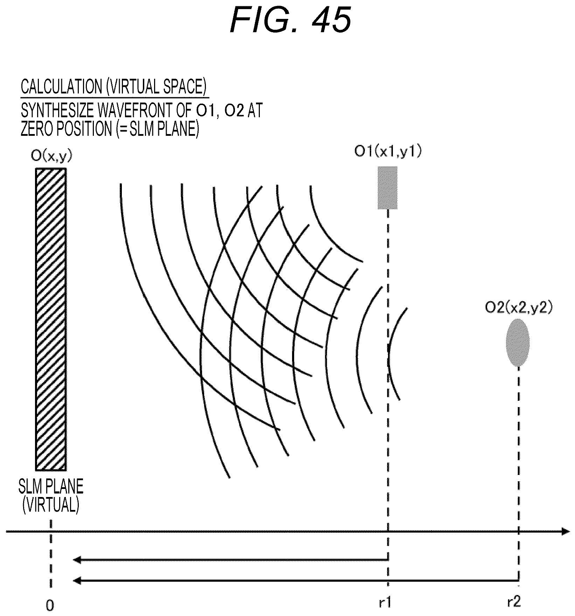

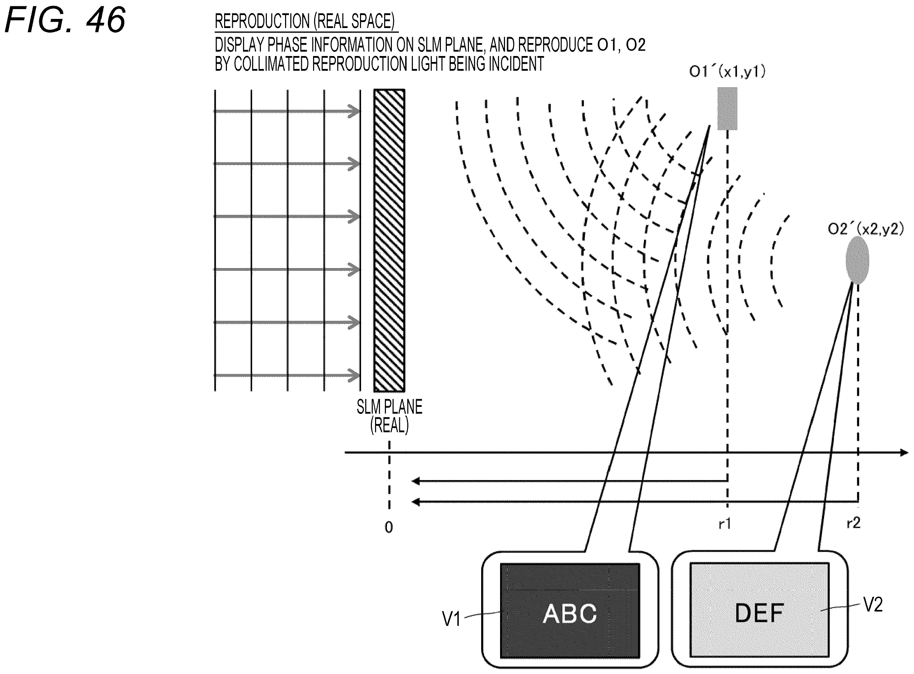

Subsequently, a case of reproducing wavefront information of two pieces of object light $O_1$ ($x_1$, $y_1$) and $O_2$ ($x_2$, $y_2$) respectively arranged at different positions r1 and r2 in the depth direction will be described with reference to Figs. 45 and 46. The object light $O_1$ ($x_1$, $y_1$) and the object light $O_2$ ($x_2$, $y_2$) are expressed by the following formulas (4) and (5), respectively. However, ($x_1$, $y_1$) is an xy coordinate system on the position r1 in the depth direction, and ($x_2$, $y_2$) is an xy coordinate system on the position r2 in the depth direction.

[Math. 4]

$$O_1(x1, y1) = A_{O1}(x1, y1)exp\big(i\phi_{O1}(x1, y1)\big) \qquad \cdots(4)$$

[Math. 5]

$$O_2(x2, y2) = A_{O2}(x2, y2)exp\big(i\phi_{O2}(x2, y2)\big) \qquad \cdots(5)$$

As illustrated in Fig. 45, the object light $O_1$ ($x_1$, $y_1$) and the object light $O_2$ ($x_2$, $y_2$) are arranged at different positions r1 and r2, respectively, in the depth direction from the zero position. First, wavefront information of each object light $O_1$ ($x_1$, $y_1$) and $O_2$ ($x_2$, $y_2$) is synthesized on a virtual space, and the object light O (x, y) at the zero position in the depth direction is calculated. The following formula (6) shows a calculation formula for synthesizing the object light $O_1$ ($x_1$, $y_1$) and the object light $O_2$ ($x_2$, $y_2$). However, since the calculation formula cannot be solved analytically, the following formula (6) shows an approximate formula. Although various calculation methods of the approximate formula are proposed, detailed description thereof is omitted here.
[Math. 6]

$$O(x, y) = \frac{1}{i\lambda} \int O1(x, y)\frac{1}{r1} exp(-ikr1)\, dxdy \qquad \cdots(6)$$

$$= +\frac{1}{i\lambda} \int O2(x, y)\frac{1}{r2} exp(-ikr2)\, dxdy$$

$$= A_O(x, y)exp\big(i\phi_O(x, y)\big)$$

Then, at the time of reproduction of the object light $O_1$ ($x_1$, $y_1$) and the object light $O_2$ ($x_2$, $y_1$), the phase information exp ($i\phi_0$ (x, y)) included in the composite wavefront information calculated on the right side of the above formula (6) is displayed on the SLM arranged at the zero position in the depth direction, and the collimated reference light (or parallel light) $A_R$ (x, y) is incident on the SLM as illustrated in Fig. 46, so that the passing light is wavefront controlled by the SLM. As a result, reproduction light $O_1$' ($x_1$, $y_1$) and reproduction light $O_2$' ($x_2$, $y_2$) of each object illustrated in the following formulas (7) and (8), respectively, can be reproduced at the same position as in the calculation illustrated in Fig. 45.
[Math. 7]

$$O_1{}'(x1, y1) = A_r(x1, y1)exp\big(i\phi_{O1}(x1, y1)\big) \qquad \cdots(7)$$

[Math. 8]

$$O_2{}'(x2, y2) = A_r(x2, y2)exp\big(i\phi_{O2}(x2, y2)\big) \qquad \cdots(8)$$

Each of the reproduction light $O_1$' ($x_1$, $y_1$) and the reproduction light $O_2$' ($x_2$, $y_2$) is equivalent to arbitrary two-dimensional information. Therefore, it can be said that videos V1 and V2 can be simultaneously projected on the two surfaces of the positions r1 and r2 different in the vertical and horizontal directions and the depth direction.
As described above, the phase modulation type projection device is used as the best embodiment of the present disclosure because the phase modulation scheme can reproduce object light with high light utilization efficiency without generating unnecessary components. The distribution of light can be reproduced at an arbitrary position in each of the xyz directions, and simultaneous projection on a plurality of projection surfaces different in the depth direction in addition to the vertical and horizontal directions can be performed by one projection device. However, even in the amplitude modulation scheme, it is possible to realize display on a plurality of surfaces having different depths according to the principle of holography, and a projection device of the amplitude modulation scheme may be used if the fact that unnecessary components are generated and light utilization efficiency is lowered is not a problem.
Since simultaneous projection can be performed on a plurality of projection surfaces including the depth direction by only one projection device, space saving is achieved. As a matter of course, if there are no restrictions on space efficiency, energy consumption, and cost, the projection system may adopt a multi-projector in which a plurality of projection devices is integrated. In the following description, unless otherwise specified, it is assumed that the projection system uses only one projection device of the phase modulation scheme.

Note that examples of phase distribution generation algorithm for generating the phase distribution displayed on the phase modulation type SLM include a GS method and a method of calculating a freeform phase, but are not limited thereto.

C. System Configuration

In section C, a configuration of a projection system to which the present disclosure is applied will be described.

C-1. System Configuration Example (1)

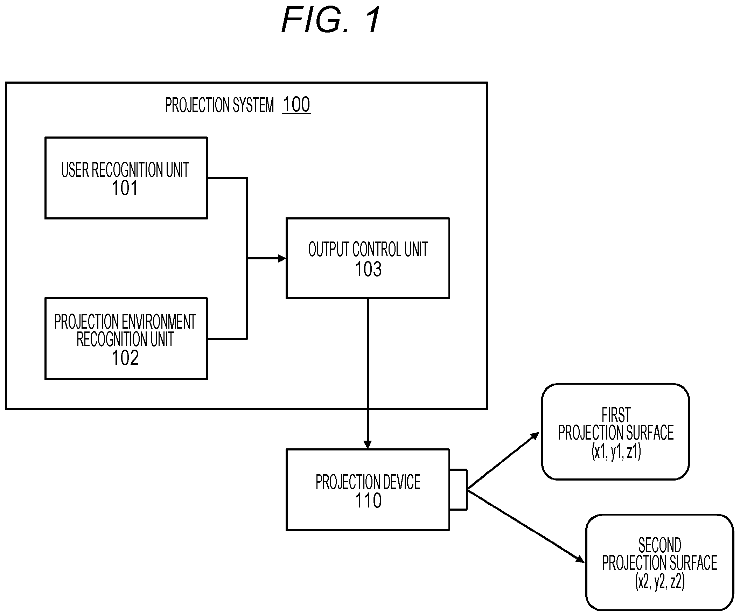

Fig. 1 schematically illustrates a configuration of a projection system 100 to which the present disclosure is applied. The illustrated projection system 100 includes a user recognition unit 101, a projection environment recognition unit 102, and an output control unit 103.

The user recognition unit 101 recognizes a user existing in a space within a range that can be projected by the projection system 100. The user recognition unit 101 basically recognizes the user on the basis of sensor information acquired by a sensor installed in the same space. In a case where the projection system 100 is mounted on a vehicle, the user recognition unit 101 recognizes a user inside the vehicle (a passenger or the like) and a user outside the vehicle (a pedestrian or the like around the vehicle). The user recognition unit 101 further recognizes the characteristic and state of the user, which will be described later in detail.

The projection environment recognition unit 102 recognizes a portion that can be actually projected by the projection device 110 as a projection surface in a space within a range that can be projected by the projection system 100. The projection environment recognition unit 102 basically recognizes the projection surface on the basis of sensor information acquired by a sensor installed in the same space. The projection environment recognition unit 102 further recognizes the characteristic and state of the projection surface, which will be described later in detail.

The output control unit 103 controls the output of the projection device 110 on the basis of the respective recognition results of the user recognition unit 101 and the projection environment recognition unit 102 so as to project a video on the projection surface and display information to the user. The projection device 110 is a phase modulation type projection device as described in the above section B, and is a projection device capable of simultaneously projecting on a plurality of projection surfaces different in the vertical and horizontal directions and the depth direction.

The output control unit 103 basically controls the projection operation of the video on the projection surface of the projection device 110 by allocating an appropriate one or a plurality of projection surfaces among the one or a plurality of projection surfaces recognized by the projection environment recognition unit 102 to the one or a plurality of users recognized by the user recognition unit 101. Fig. 1 illustrates an example in which the projection device 110 simultaneously projects videos on two projection surfaces, a first projection surface (x1, y1, z1) and a second projection surface (x2, y2, z2). Moreover, the output control unit 103 can select appropriate content in consideration of the characteristic and state of the user recognized by the user recognition unit 101 and allocate a projection surface suitable for projection of the selected content, but details of this point will be described later.

C-2. System Configuration Example (2)

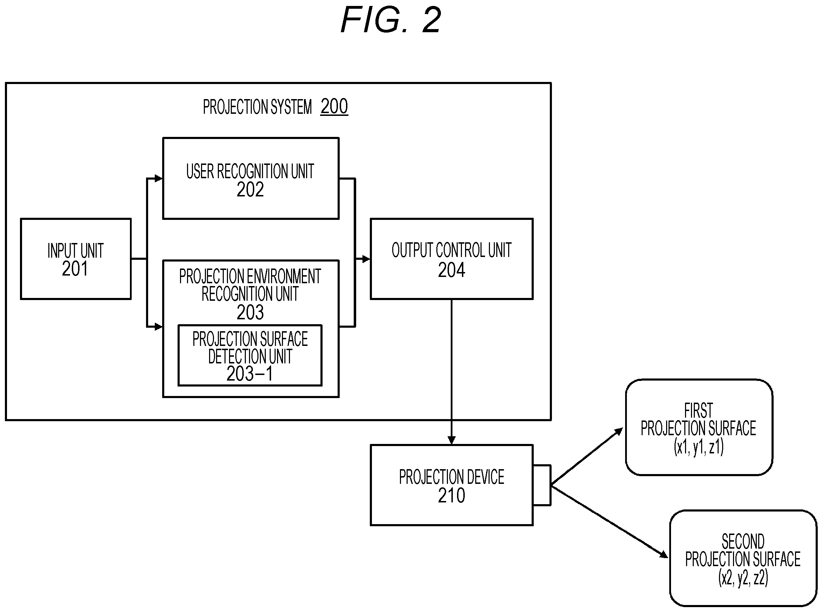

Fig. 2 schematically illustrates a configuration of a projection system 200 to which the present disclosure is applied. The illustrated projection system 200 includes an input unit 201, a user recognition unit 202, a projection environment recognition unit 203, and an output control unit 204. However, the same components as those included in the projection system 100 illustrated in Fig. 1 are denoted by the same names.

The input unit 201 inputs sensor information acquired by a sensor installed in a space within a range that can be projected by the projection system 200. Alternatively, the input unit 201 may be the sensor itself installed in the space. The sensor includes an image sensor, a distance sensor, and the like. The sensor may further include a position sensor such as a thermo camera, an ultrasonic sensor, a touch sensor, or a global positional system (GPS) sensor, and various other sensors capable of sensing information regarding the environment of the space. In a case where the space within a range that can be projected is in the inside of a vehicle, the input unit 201 inputs, for example, sensor information from an in-vehicle sensor installed inside the vehicle. In a case where the user recognition unit 202 also recognizes a user outside the vehicle, the input unit 201 also inputs sensor information outside the vehicle.

The user recognition unit 202 recognizes the user on the basis of the sensor information supplied from the input unit 201, and further recognizes the characteristic and state of the user. In a case where the projection system 200 is mounted on a vehicle, the user recognition unit 202 recognizes a user inside the vehicle (a passenger or the like) and a user outside the vehicle (a pedestrian or the like around the vehicle).

The projection environment recognition unit 203 includes a projection surface detection unit 203-1. On the basis of the sensor information supplied from the input unit 201, the projection surface detection unit 203-1 detects, as a projection surface, a portion that can be actually projected by a projection device 210 in a space within a range that can be projected by the projection system 100.

The output control unit 204 controls the output of the projection device 210 on the basis of the respective recognition results of the user recognition unit 202 and the projection surface detection unit 203-1 so as to project a video on the projection surface and display information to the user. The projection device 210 is a phase modulation type projection device as described in the above section B, and is a projection device capable of simultaneously projecting on a plurality of projection surfaces different in the vertical and horizontal directions and the depth direction.

The output control unit 204 basically controls the projection operation of the video on the projection surface of the projection device 210 by allocating an appropriate one or a plurality of projection surfaces among the one or a plurality of projection surfaces recognized by the projection surface detection unit 203-1 to the one or a plurality of users recognized by the user recognition unit 204. Moreover, the output control unit 204 selects appropriate content in consideration of the characteristic and state of the user recognized by the user recognition unit 202, and allocates a projection surface suitable for projection of the selected content.

The projection surface detection unit 203-1 will be described more specifically. From the projectable range of the projection device 210, the projection surface detection unit 203-1 detects, as a projection surface, a region that satisfies a condition defined by one or more thresholds, such as an area equal to or larger than a predetermined threshold, a curvature equal to or smaller than a predetermined threshold, or a gradient equal to or larger than a predetermined threshold (an angle formed by projection light and the projection surface). The threshold for detecting the projection surface may be defined for each user, may be defined for each piece of content, or may be defined for a combination of the user and the content. Furthermore, a threshold value for detecting the projection surface may be defined for each application to which the projection system 200 is applied.

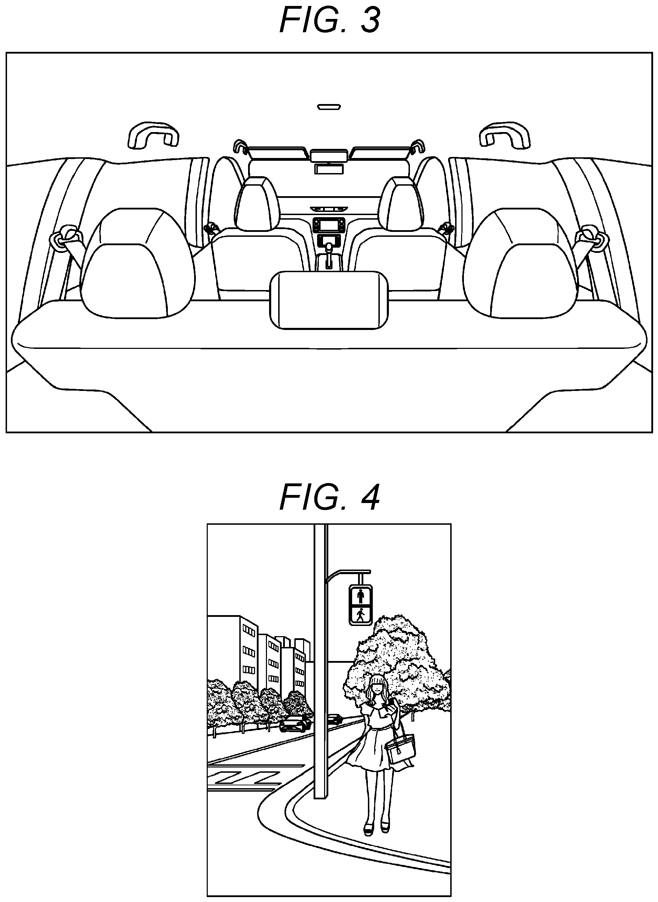

Figs. 3 and 4 illustrate sensor information acquired by a sensor installed in a space within a range that can be projected by the projection system 200. Here, it is assumed that the projection system 200 is mounted on a vehicle and used, and sensor information inside the vehicle and around the vehicle is acquired as the sensor information. The sensor includes an image sensor, a distance sensor, and the like, and the input unit 201 inputs image data of the inside of the vehicle as illustrated in Fig. 3 and image data of the periphery of the vehicle as illustrated in Fig. 4. Furthermore, the input unit 201 may simultaneously input sensor information acquired by a thermo camera, an ultrasonic sensor, a touch sensor, and various other sensors capable of sensing information regarding the environment of the space in the same environment.

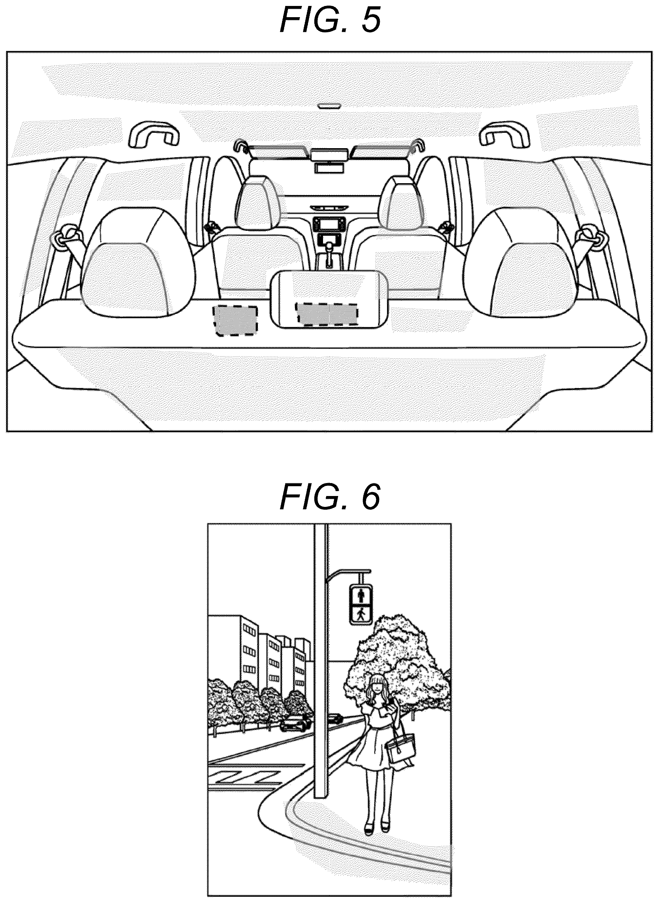

The projection surface detection unit 203-1 detects a plurality of projection surfaces suitable for the user inside the vehicle recognized by the user recognition unit 202 on the basis of the image data of the inside of the vehicle illustrated in Fig. 3. In the example illustrated in Fig. 5, the projection surface detection unit 203-1 detects a plurality of projection surfaces having an area equal to or larger than a predetermined threshold, a curvature equal to or smaller than a predetermined threshold, and a gradient equal to or larger than a predetermined threshold (an angle formed by projection light and the projection surface), such as a headrest of the seat in front, a ceiling, and a pillar, as the projection surface suitable for the user (not illustrated) sitting on the last seat. In Fig. 5, each detected projection surface is displayed in light gray. Furthermore, the projection surface detection unit 203-1 does not detect a portion having an area equal to or larger than the predetermined threshold and a curvature equal to or smaller than the predetermined threshold, but having a gradient of less than the threshold as the projection surface.

Furthermore, the projection surface detection unit 203-1 detects a projection surface suitable for the user around the vehicle recognized by the user recognition unit 202 on the basis of the image data of the periphery of the vehicle illustrated in Fig. 4. In the example illustrated in Fig. 6, in a case where a woman waiting for a traffic light at the intersection around the vehicle is recognized as a user outside the vehicle, the projection surface detection unit 203-1 detects a projection surface having an area equal to or larger than a predetermined threshold, a curvature equal to or smaller than a predetermined threshold, and a gradient equal to or larger than a predetermined threshold (an angle formed by projection light and the projection surface), such as a road surface in front of the woman. In Fig. 6, the projection surface detected on the road surface in front of the woman is displayed in light gray.

C-3. Projection Device Capable of Simultaneously Projecting on a Plurality of Projection Surfaces Different in Depth Direction

As described in the above section B, in the present disclosure, simultaneous projection on a plurality of projection surfaces different in the depth direction in addition to the vertical and horizontal directions is realized using the phase modulation type projection device.

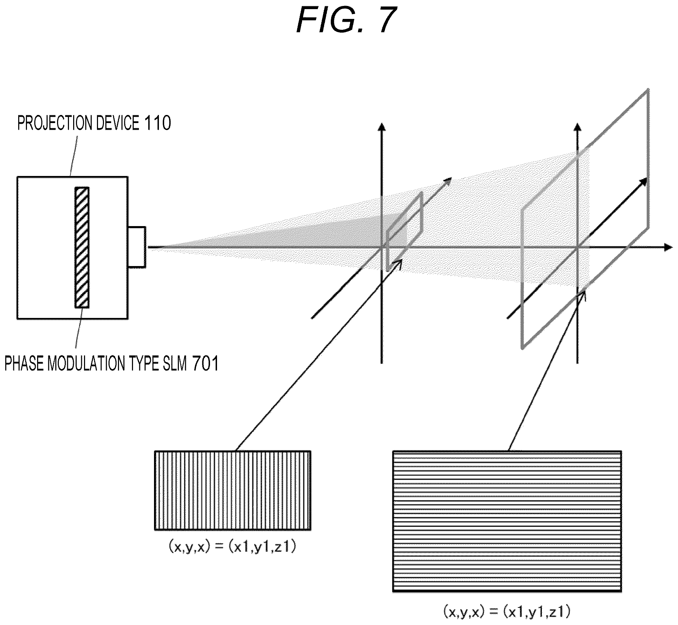

Fig. 7 illustrates an operation example of the projection device 110 in Fig. 1. The same applies to the operation of the projection device 210 in Fig. 2.

The projection device 110 includes a phase modulation type SLM (phase modulation type LCOS or the like) 701. Phase information included in composite wavefront information of videos to be projected onto each of two projection surfaces (x1, y1, z1) and (x2, y2, z2) different in the depth direction is displayed on a phase modulation type SLM 701, and when reproduction light (substantially parallel light) obtained by collimating irradiation light of a light source (not illustrated in Fig. 7) is incident from the rear of the phase modulation type SLM 701, desired videos are simultaneously projected onto the respective front projection surfaces (x1, y1, z1) and (x2, y2, z2).

Note that examples of the phase distribution generation algorithm for generating the phase distribution displayed on the phase modulation type SLM 701 include the GS method and the method of calculating a freeform phase (described above), but are not limited thereto.

Furthermore, a luminance modulation panel (not illustrated) may be arranged at the subsequent stage of the phase modulation type SLM 701. By using the luminance modulation panel, the luminance dynamic range of the projected video can be extended and the resolution can be improved. In this case, processing of determining the transmittance or the reflectance of the luminance modulation panel is performed. However, it should be noted that in a case where the luminance dynamic range is extended, the overall luminance decreases, and thus, in addition to this, the resolution of the projected video can be improved.

By using the phase modulation type projection device 110, it is possible to simultaneously project on a plurality of projection surfaces different in the depth direction. In a case where the projection system 100 is mounted on a vehicle, multi-projection on a plurality of projection surfaces such as a headrest, a pillar, and a ceiling inside the vehicle can be realized as illustrated in Fig. 5.

Furthermore, according to the projection device 110, focusing on a moving object can be performed by changing the phase distribution displayed on the phase modulation type SLM 701. For example, in projection mapping interaction with a dish, focusing can be performed even when a plate is lifted. As another example of focusing, moving production can be performed in applications (described later) such as various projection mapping events including a fashion show, bowling, and other sports competitions.

The projection device 110 can also be used as a light source of structured light. The structured light is one method of three-dimensional measurement, and can irradiate an object with structured light patterned in a dot shape or the like and acquire depth information from distortion of the pattern. By using the phase modulation type projection device 110, projection can be performed without changing density according to the depth.

Furthermore, the projection device 110 can be applied to a VR system such as CAVE or Warp to display a video in a wide area by one device.

Furthermore, the projection device 110 can be used as an indicator of a touch sensor in an aerial display that displays a video in the air (described later). By using the projection device 110, a dark and small point can be presented in a case where the distance is long, and a large and bright point can be presented in a case where the distance is short.

C-4. System Configuration Example (3)

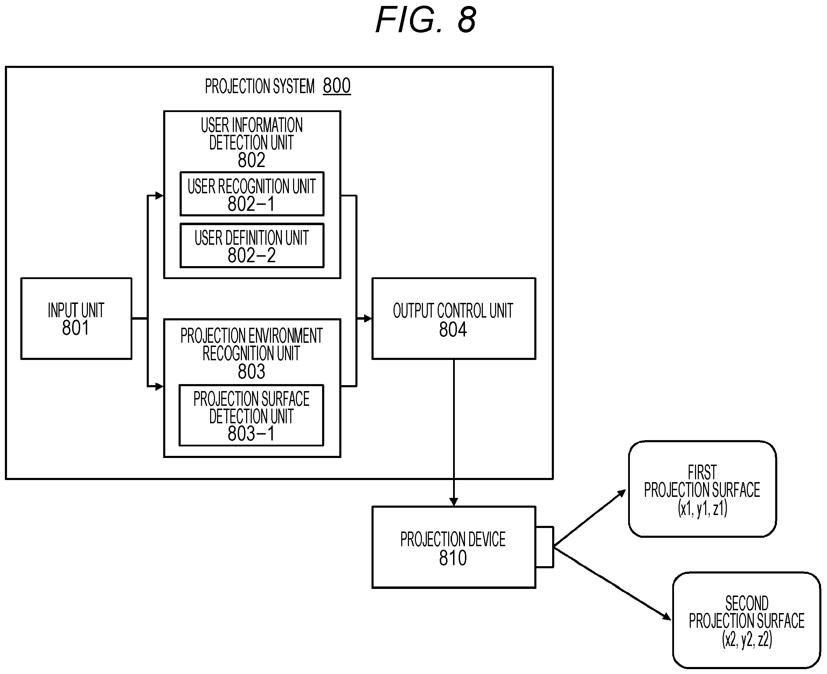

Fig. 8 schematically illustrates a configuration of a projection system 800 to which the present disclosure is applied. The illustrated projection system 800 includes an input unit 801, a user information detection unit 802, a projection environment recognition unit 803, and an output control unit 804. However, the same components as those included in the projection system 100 illustrated in Fig. 1 or the projection system 200 illustrated in Fig. 2 are denoted by the same names. The projection system 800 has a main feature in a method of detecting user information.

The input unit 801 inputs sensor information acquired by a sensor installed in a space within a range that can be projected by the projection system 800. Alternatively, the input unit 801 may be the sensor itself installed in the space. The sensor includes an image sensor, a distance sensor, and the like. The sensor may further include a thermo camera, an ultrasonic sensor, a touch sensor, and various other sensors capable of sensing information regarding the environment of the space. The input unit 801 inputs, for example, sensor information from an in-vehicle sensor installed inside the vehicle. In a case where the user recognition unit 802 also recognizes a user outside the vehicle, the input unit 801 also inputs sensor information outside the vehicle.

The user information detection unit 802 includes a user recognition unit 802-1 and a user definition unit 802-2.

The user recognition unit 802-1 recognizes the user on the basis of the sensor information supplied from the input unit 801. The user recognition unit 802-1 detects the number of users, the position of the user, and the direction of the face and the line-of-sight of the user by particularly using image information of an RGB camera and a distance sensor as the sensor information. The user recognition unit 802-1 can realize such posture recognition by using a posture estimation model such as Openpose developed by Carnegie Mellon University, for example. In a case where the projection system 800 is mounted on a vehicle, the user recognition unit 802-1 recognizes a user inside the vehicle (a passenger or the like) and a user outside the vehicle (a pedestrian or the like around the vehicle).

The user definition unit 802-2 defines the characteristic and state of the user recognized by the user recognition unit 802-1. When the user recognition unit 802-1 recognizes a plurality of users, the characteristic and state are defined for each user. The user definition unit 802-2 compares, for example, with a database describing stereotype information of the user, and defines characteristic data of the user recognized from the image. Furthermore, the user definition unit 802-2 defines the state of the user such as awakening or sleeping on the basis of the recognition result by the user recognition unit 802-1. The user definition unit 802-2 can estimate the state of the user using, for example, the number of blinks, movement of the line-of-sight, and the like as parameters. Furthermore, the user definition unit 802-2 may estimate the attribute of the user using a learned machine learning model. The user definition unit 802-2 stores the characteristic and state defined for each user recognized by the user recognition unit 802-1 in a user characteristic database.

The projection environment recognition unit 803 includes a projection surface detection unit 803-1. On the basis of the sensor information supplied from the input unit 801, the projection surface detection unit 803-1 detects, as a projection surface, a portion that can be actually projected by a projection device 810 in a space within a range that can be projected by the projection system 800. As already described in section C-2 above, from the projectable range of the projection device 810, the projection surface detection unit 803-1 detects, as a projection surface, a region that satisfies a condition defined by one or more thresholds, such as an area equal to or larger than a predetermined threshold, a curvature equal to or smaller than a predetermined threshold, or a gradient equal to or larger than a predetermined threshold (an angle formed by projection light and the projection surface).

The output control unit 804 controls the output of the projection device 810 on the basis of the respective recognition results of the user recognition unit 802-1 and the projection surface detection unit 803-1 so as to project a video on the projection surface and display information to the user. The projection device 810 is a phase modulation type projection device as described in the above section B, and is a projection device capable of simultaneously projecting on a plurality of projection surfaces different in the vertical and horizontal directions and the depth direction.

Subsequently, the operations of the user recognition unit 802-1 and the user definition unit 802-2 in the user information detection unit 802 will be mainly described specifically in detail by taking a case in which the projection system 800 is mounted on a vehicle as an example.

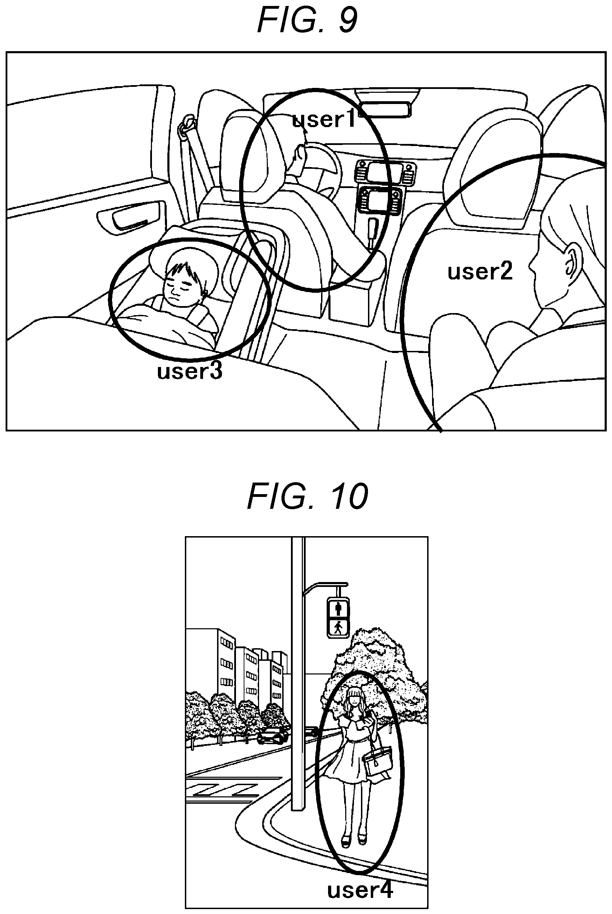

The user recognition unit 802-1 recognizes three users (user1, user2, user3) inside the vehicle as illustrated in Fig. 9, for example, on the basis of the image data of the inside of the vehicle. Furthermore, the user recognition unit 802-1 recognizes a user (user4) walking around the vehicle as illustrated in Fig. 10, for example, on the basis of the image data of the periphery of the vehicle. Then, an entry of each user (user1, user2, user3, user4) is provided in the user characteristic database.

Subsequently, the user definition unit 802-2 defines characteristic data for each user by associating stereotype information with each recognized user. For example, as characteristic data, "male, thirties, company employee" is defined for the user1, "female, thirties, housewife" is defined for the user2, "infant" is defined for the user3, and "female, twenties, undergraduate" is defined for the user4.

Furthermore, the user definition unit 802-2 defines the state of the user such as awakening or sleeping of each recognized user. The user definition unit 802-2 can estimate the state of the user using, for example, the number of blinks, movement of the line-of-sight, and the like as parameters. For example, as characteristic data, "driving" is defined for the user1, "waking up" is defined for the user2, "waking up" is defined for the user3, and "waking up and waiting at a traffic light" is defined for the user4.

Moreover, the user definition unit 802-2 defines whether information can be displayed to the user (Yes) or not (No) on the basis of the characteristic and state of the user. The display of the information referred to here means projection of a video onto a projection surface allocated to the user by the projection device 810. For example, whether or not to display the information of each user is defined such that the user1 is "No", the user2 is "Yes", the user3 is "No", and the user4 is "Yes". For example, while a user in an awake state is defined as information display "Yes", a user who is driving or sleeping, a user who is awake but operates a smartphone or listens to music, a baby, or the like is defined as information display "No".

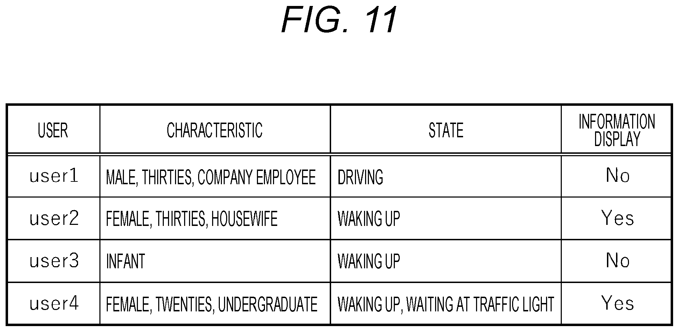

Then, the characteristic, the state, and the information display defined for each user by the user definition unit 802-2 are stored in the entry of each user in the user characteristic database. Fig. 11 illustrates a user characteristic database storing information of each user defined by the user definition unit 802-1.

Note that it is assumed that what kind of user characteristic or state is defined for the recognition result by the user recognition unit 802-1 differs according to the definition rule or the machine learning model used by the user definition unit 802-2. Fig. 11 is an example of the user characteristic database, and it is also assumed that different characteristics and states are defined according to a definition rule or a machine learning model to be used.

The output control unit 804 controls information display to each user on the basis of the user characteristic database as illustrated in Fig. 11. Specifically, the output control unit 804 controls the output of the projection device 810 such that the video of content is projected on each of the projection surfaces by allocating any one of the projection surfaces detected by the projection surface detection unit 803-1 to the user2 and the user4 defined as the information display "Yes" on the user characteristic database. On the other hand, the output control unit 804 does not allocate the projection surface to the user1 and the user3 defined as the information display "No" on the user characteristic database, and therefore does not project the video to these users.

C-5. System Configuration Example (4)

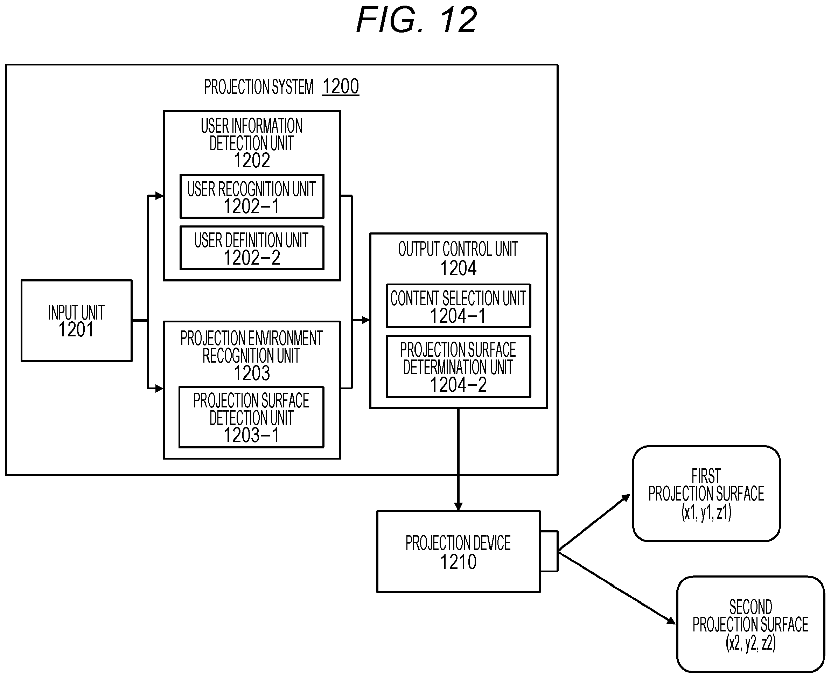

Fig. 12 schematically illustrates a configuration of a projection system 1200 to which the present disclosure is applied. The illustrated projection system 1200 includes an input unit 1201, a user information detection unit 1202, a projection environment recognition unit 1203, and an output control unit 1204. However, the same components as those included in the projection system 800 illustrated in Fig. 8 are denoted by the same names. The projection system 1200 has a main feature in that content to be displayed to the user is selected and a projection surface is determined on the basis of user information.

The input unit 1201 inputs sensor information acquired by a sensor installed in a space within a range that can be projected by the projection system 1200. Alternatively, the input unit 1201 may be the sensor itself installed in the space. The input unit 1201 inputs, for example, sensor information from an in-vehicle sensor installed inside the vehicle. In a case where the user recognition unit 1202 also recognizes a user outside the vehicle, the input unit 1201 also inputs sensor information outside the vehicle.

The user information detection unit 1202 includes a user recognition unit 1202-1 and a user definition unit 1202-2. The user recognition unit 1202-1 detects the number of users, the position of the user, and the direction of the face and the line-of-sight of the user from the sensor information supplied from the input unit 1201 using, for example, the posture estimation model such as Openpose. Then, the user definition unit 1202-2 defines the characteristic and state of the user recognized by the user recognition unit 1202-1, and stores the characteristic and state defined for each user in the entry of the corresponding user in the user characteristic database.

The projection environment recognition unit 1203 includes a projection surface detection unit 1203-1. On the basis of the sensor information supplied from the input unit 1201, the projection surface detection unit 1203-1 detects, as a projection surface, a portion that can be actually projected by a projection device 1210 in a space within a range that can be projected by the projection system 1200. As already described in section C-2 above, from the projectable range of the projection device 1210, the projection surface detection unit 1203-1 detects, as a projection surface, a region that satisfies a condition defined by one or more thresholds, such as an area equal to or larger than a predetermined threshold, a curvature equal to or smaller than a predetermined threshold, or a gradient equal to or larger than a predetermined threshold (an angle formed by projection light and the projection surface).

The output control unit 1204 includes a content selection unit 1204-1 and a projection surface determination unit 1204-2. The content selection unit 1204-1 selects content to be displayed to the user on the basis of the user information recognized by the user recognition unit 1202. Furthermore, the projection surface determination unit 1204-2 determines a projection surface on which the video of the content is projected from among the projection surfaces detected by the projection surface detection unit 1203-1.

Furthermore, the output control unit 1204 performs projection size determination processing on the projection surface allocated to each piece of content by the projection surface determination unit 1204-2, and projection luminance determination processing for determining the luminance and chromaticity of the video to be projected. As the projection size determination processing, the projectable size with respect to the projection surface is calculated on the basis of the distance between the projection surface and the projection device 1210, the projectable size is compared with a recommended size of the content, and content reduction processing is performed as necessary so that the content is within the projectable size. As the projection luminance determination processing, the output and the correction amount of the projection device 1210 are calculated from the characteristics of the projection surface (chromaticity, luminance, reflectance). As for the chromaticity, a chromaticity correction value of a color space is calculated on the basis of chromaticity information of the projection surface. In a case where the chromaticity of a certain pixel in the content exceeds the displayable chromaticity of the projection device 1210, the chromaticity is determined so as to match the displayable chromaticity of the projection device 1210. As for the luminance, the possible output of the projection device 1210 is calculated from the total number of projection surfaces on which the content is projected and the content to be projected, the feasible luminance is further calculated in consideration of the reflectance of the projection surface, and the feasible luminance is compared with the luminance of the original signal of the content is compared. In a case where the luminance of the original signal of the content is less than the luminance of the original signal, the output luminance is decreased to the feasible luminance, or setting values (current value, duty value, and the like) of the projection device 1210 at that time is calculated. In a case where the determination is made by priority of chromaticity, the determination is made in the order of chromaticity → luminance. However, in a case where the determination is made by priority of luminance, the determination is not limited to this order, and the determination method is not limited to the above. Display information such as the determined projection size, luminance, and chromaticity is stored in the entry of the corresponding content in the user characteristic database.

Then, the output control unit 1204 controls the output of the projection device 1210 so as to project a video on the projection surface and display information to the user. The projection device 1210 is a phase modulation type projection device as described in the above section B, and is a projection device capable of simultaneously projecting on a plurality of projection surfaces different in the vertical and horizontal directions and the depth direction. The output control unit 1204 performs display image generation processing on the basis of the projection size, the projection luminance, and the projection chromaticity determined for each projection surface on which the content is projected. The display image generation processing includes display target generation processing, display phase distribution generation processing, and drive parameter setting processing. In the display target generation processing, a luminance distribution target to be displayed for monochrome or each color channel is generated. In the display phase distribution generation processing, a phase distribution is generated for each calculated luminance distribution target. In a case where the luminance correction is performed, optical correction information corresponding to the luminance correction amount is added to the generated phase distribution. Examples of the phase distribution generation algorithm include the GS method and the freeform method, but are not limited thereto. In the drive parameter setting processing, a drive parameter (current value in case of CW, duty in case of pulse) of the light source of the projection device 1210 is set so as to display the determined luminance and chromaticity. Furthermore, in a case where a luminance modulation panel at the subsequent stage of the phase modulation type SLM is arranged, the transmittance or the reflectance of the luminance modulation panel is determined. The output control unit 1204 outputs the determined information to the projection device 1210 to project a video.

Hereinafter, each of the content selection unit 1204-1 and the projection surface determination unit 1204-2 will be described in detail.

The content selection unit 1204-1 selects content to be displayed to the user on the basis of the user information (that is, the user characteristic database) defined by the user definition unit 1202-1. Specifically, the content selection unit 1204-1 compares the characteristic and state of the user defined by the user definition unit 1202-2 with the content database (attribute information of each piece of content or the like), and matches the content to be displayed to the user. Collaborative filtering (CF), other recommendation technologies, or a machine learning model can be applied to the matching, but is not limited to a specific method. Then, the content selection unit 1204-1 stores the information of the content (access information to content, such as a content name or a uniform resource locator (URL)) selected for the user in the entry of the corresponding user in the user characteristic database.

The content selection unit 1204-1 may select a plurality of pieces of content for one user. In a case where there is a plurality of pieces of content to be displayed to one user, for example, the content may be stored in the entry of the corresponding user in the user characteristic database in order of priority based on any of the following rules (1) to (3). Furthermore, the priority order of a plurality of pieces of content may be determined on the basis of a learned machine learning model instead of the following rule base.

(1) Priority order based on predetermined user preference
(2) Priority based on current position information of user (priority of surrounding facility, event information, surrounding weather forecasts, or the like).
(3) Priority based on current time (for example, news is prioritized at 7:00 AM, 12:00 in the daytime, and 18:00 in the evening).

Furthermore, the content selection unit 1204-1 may select a plurality of pieces of content to be displayed to one user. In this case, an entry for storing two or more contents for the corresponding user may be added to the user characteristic database.

Note that it is sufficient that the content selection unit 1204-1 selects the content only for the user whose information display is defined as "Yes", and does not select the content for the user whose information display is defined as "No". The entry of the user whose information display is defined as "No" may be deleted from the user characteristic database.

The projection surface determination unit 1204-2 determines a projection surface for projecting the content selected by the content selection unit 1204-1 from among the projection surfaces detected by the projection surface detection unit 1203-1. The projection surface determination unit 1204-2 performs determination processing of a projection surface for each piece of content selected for the user by the content selection unit 1204-1. First, the projection surface determination unit 1204-2 determines whether or not the projection surface detected by the projection surface detection unit 1203-1 is present in the field of view of the user from which the content has been selected. Here, in a case where the projection surface detected by the projection surface detection unit 1203-1 is present in the field of view of the target user, the projection surface determination unit 1204-2 stores the projection surface in association with the user (alternatively, the content selected for the user) in the entry of the corresponding user in the user characteristic database. On the other hand, in a case where the projection surface is not present in the field of view of the target user, the projection surface determination unit 1204-2 does not associate the projection surface with the user.

The projection surface determination unit 1204-2 may allocate the projection surface to the content on the basis of any one of the following priority orders (1) to (6) .
(1) Descending order of area (absolute value) of projection surface
(2) Descending order of angle of view with respect to user
(3) Ascending order of distance between user and projection surface
(4) Order closer to recommended screen size or recommended angle of view of content
(5) Descending order of contrast between background of projection surface and content
(6) Ascending order of background luminance of projection surface

Subsequently, an operation in which the projection system 1200 selects content to be displayed to the user on the basis of the user information and determines a projection surface will be specifically described by taking a case of being mounted on a vehicle as an example.

The user recognition unit 1202-1 recognizes three users (user1, user2, user3) inside the vehicle as illustrated in Fig. 9, for example, on the basis of the image data of the inside of the vehicle. Furthermore, the user recognition unit 1202-1 recognizes a user (user4) walking around the vehicle as illustrated in Fig. 10, for example, on the basis of the image data of the periphery of the vehicle. Subsequently, the user definition unit 1202-2 defines characteristic data for each user by associating stereotype information with each recognized user (user1, user2, user3, user4). Then, the user characteristic database as illustrated in Fig. 11 is constructed.

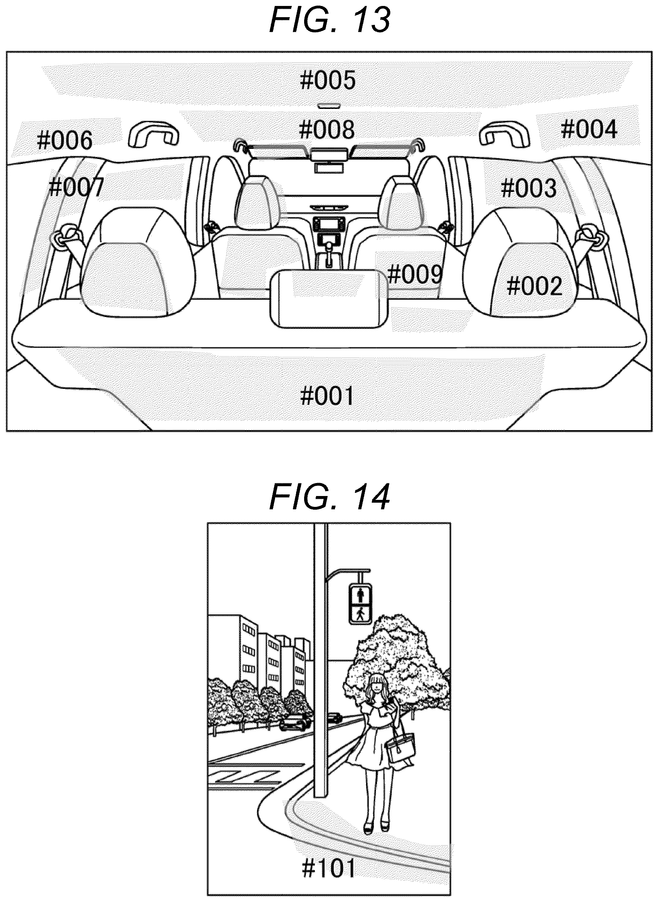

On the basis of the sensor information supplied from the input unit 1201, the projection surface detection unit 1203-1 of the projection environment recognition unit 1203 detects, as a projection surface, a portion that can be actually projected by the projection device 1210 in each of the inside and the outside of the vehicle. Here, it is assumed that the projection surface detection unit 1203-1 detects a total of nine projection surfaces #001 to #009 inside the vehicle as illustrated in Fig. 13, and detects one projection surface #101 on the road surface near the user4 outside the vehicle as illustrated in Fig. 14.

The content selection unit 1204-1 selects content to be displayed for each of two users of the user2 and the user4 whose information display is defined as "Yes" in the user characteristic database illustrated in Fig. 11. Here, the content selection unit 1204-1 selects three pieces of content of "Okinawa resort advertisement", "news", and "map" for the user2, selects one piece of content of "shopping mall advertisement" for the user4, and stores the selected pieces of content in the entry of the corresponding user in the user characteristic database.

Subsequently, the projection surface determination unit 1204-2 determines, from among the projection surfaces detected by the projection surface detection unit 1203-1, the projection surface on which each piece of content "Okinawa resort advertisement", "news", "map", and "shopping mall advertisement" selected by the content selection unit 1204-1 is projected. As described above, the projection surface determination unit 1204-2 determines the projection surface on which the content is present in the field of view of the selected user, and determines the projection surface on which the content selected by the user is displayed from among the projection surfaces in the field of view of the user according to the priority order (described above). Here, the projection surface #009 detected in the field of view of the user2 is determined as a projection surface on which the content "Okinawa resort advertisement" and "news" are displayed, the other projection surface #003 detected in the field of view of the user2 is determined as a projection surface on which the content "map" is displayed, and the projection surface #101 detected in the field of view of the user4 is determined as a projection surface on which the content "shopping mall advertisement" is displayed.

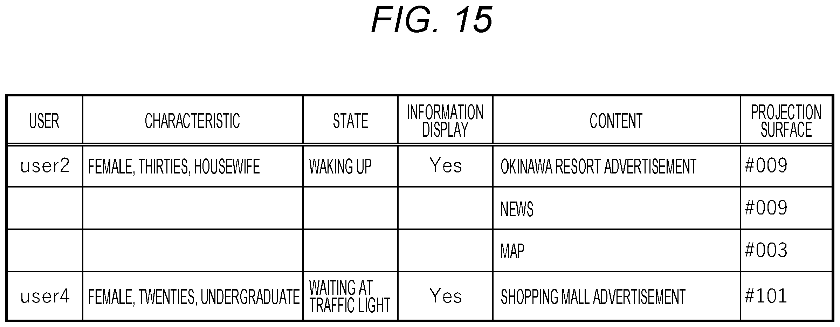

Then, the projection surface determination unit 1204-2 stores the projection surface allocated to each piece of content in the entry of the corresponding user in the user characteristic database. Fig. 15 illustrates a user characteristic database storing the content selected by the content selection unit 1204-1 for the user and the information on the projection surface allocated to each piece of content by the projection surface determination unit 1204-2.

C-6. System Configuration Example (5)

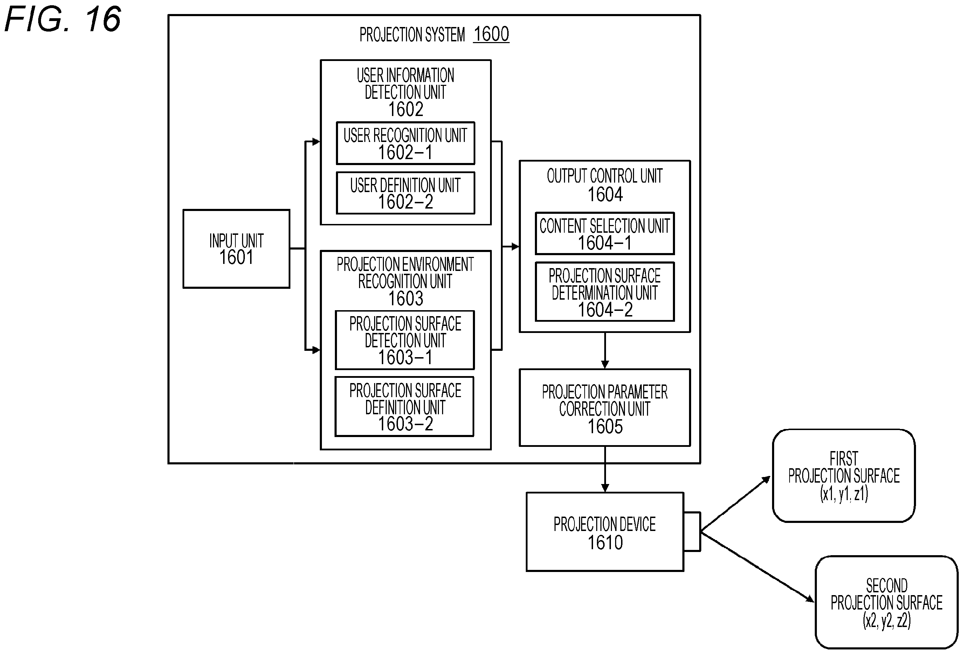

Fig. 16 schematically illustrates a configuration of a projection system 1600 to which the present disclosure is applied. The illustrated projection system 1600 includes an input unit 1601, a user information detection unit 1602, a projection environment recognition unit 1603, and an output control unit 1604, a projection parameter correction unit 1605. However, the same components as those included in the projection system 1200 illustrated in Fig. 12 are denoted by the same names. The projection system 1600 has a main feature in that the characteristic of a projection surface is defined on the basis of sensor information, and a projection surface having a characteristic suitable for content projection is determined.

The input unit 1601 inputs sensor information acquired by a sensor installed in a space within a range that can be projected by the projection system 1600. Alternatively, the input unit 1601 may be the sensor itself installed in the space. The input unit 1601 inputs, for example, sensor information from an in-vehicle sensor installed inside the vehicle. In a case where the user recognition unit 1602 also recognizes a user outside the vehicle, the input unit 1601 also inputs sensor information outside the vehicle.

The user information detection unit 1602 includes a user recognition unit 1602-1 and a user definition unit 1602-2. The user recognition unit 1602-1 detects the number of users, the position of the user, and the direction of the face and the line-of-sight of the user from the sensor information supplied from the input unit 1601 using, for example, the posture estimation model such as Openpose. Then, the user definition unit 1602-2 defines the characteristic and state of the user recognized by the user recognition unit 1602-1, and stores the characteristic and state defined for each user in the entry of the corresponding user in the user characteristic database.

The projection environment recognition unit 1603 includes a projection surface detection unit 1603-1 and a projection surface definition unit 1603-2. On the basis of the sensor information supplied from the input unit 1601, the projection surface detection unit 1603-1 detects, as a projection surface, a portion that can be actually projected by the projection device 1610 in a space within a range that can be projected by the projection system 1600 (the same as above). In the projection system 1600, a projection surface database is used to manage the characteristics of each projection surface detected by the projection surface detection unit 1603-1. An entry of each projection surface detected by the projection surface detection unit 1603-1 is provided in the projection surface database.

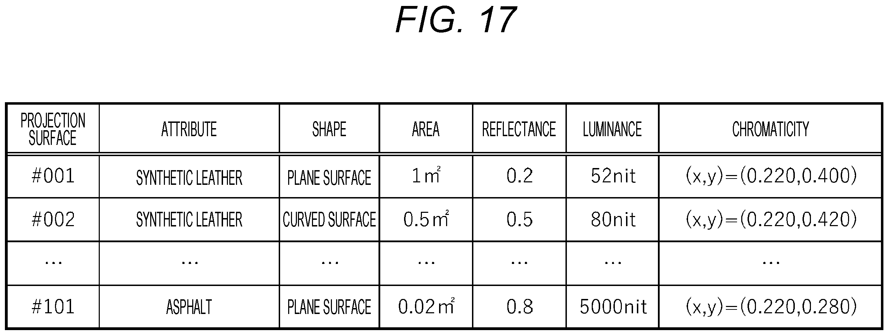

The projection surface definition unit 1603-2 recognizes the characteristics of the projection surface detected by the projection surface detection unit 1603-1 and stores the information in the corresponding entry of the projection surface database. Specifically, the projection surface definition unit 1603-2 allocates characteristic information such as attribute, shape, area, reflectance, chromaticity, and luminance to the projection surface, and stores the characteristic information in the projection surface database. As for the attribute of the projection surface, the projection surface definition unit 1603-2 may perform clustering in comparison with a predetermined database, or may perform clustering using a learned machine learning model. The projection surface definition unit 1603-2 calculates the shape, area, reflectance, chromaticity, and luminance of the projection surface on the basis of the sensor information acquired by the input unit 1601. Fig. 17 illustrates an example of the projection surface database storing characteristic information defined for each projection surface detected inside and outside the vehicle as illustrated in Figs. 13 and 14. However, the chromaticity is represented by a coordinate position on the chromaticity map.

The characteristic data of the projection surface defined by the projection surface definition unit 1603-2 can be used when the projection surface suitable for the content is determined by the projection surface determination unit 1604-2 in the subsequent stage and, moreover, when projection parameters are corrected by the projection parameter correction unit 1605.

The output control unit 1604 includes a content selection unit 1604-1 and a projection surface determination unit 1604-2. The content selection unit 1604-1 selects content to be displayed to the user on the basis of the user information recognized by the user recognition unit 1602. Furthermore, the projection surface determination unit 1604-2 determines a projection surface to be allocated to the user or a projection surface having a characteristic of projecting the video of the content selected for the user from among the projection surfaces detected by the projection surface detection unit 1603-1. The information regarding the content selected by the content selection unit 1604-1 and the projection surface of the content determined by the projection surface determination unit 1604-2 is stored in the user characteristic database (described above).

The projection parameter correction unit 1605 has a function of correcting the projection parameters such as on the content selected by the content selection unit 1604-1 and the projection surface determined by the projection surface determination unit 1604-2 in order to maintain the projection quality. For example, when the area of the projection surface is smaller than the recommended screen size of the content, the projection parameter correction unit 1605 performs processing of reducing the screen size of the original content. Furthermore, when the luminance and chromaticity of the projected video are greatly different from those of the original content due to the characteristics of the projection surface, which is the background, the projection parameter correction unit 1605 performs signal processing so that the luminance and chromaticity of the projected video becomes closer to the original luminance and chromaticity. The display information such as the projection size, luminance, and chromaticity corrected by the projection parameter correction unit 1605 is stored in the entry of the corresponding content in the user characteristic database. The detailed function of the projection parameter correction unit 1605 will be described in the subsequent section C-7. The correction processing by the projection parameter correction unit 1605 may be performed in real time.

The projection device 1610 is a phase modulation type projection device as described in the above section B, and is a projection device capable of simultaneously projecting on a plurality of projection surfaces different in the vertical and horizontal directions and the depth direction. Display image generation processing for generating an image to be projected by the projection device 1610 is performed on the basis of the projection size, the projection luminance, and the projection chromaticity corrected by the projection parameter correction unit 1605. This display image generation processing may be performed by the output control unit 1604 or may be performed by the projection parameter correction unit 1605. Since the display image generation processing is as described in the above section C-5, the detailed description thereof will be omitted here. The projection device 1610 projects a video on the basis of the information determined by the display image generation processing.

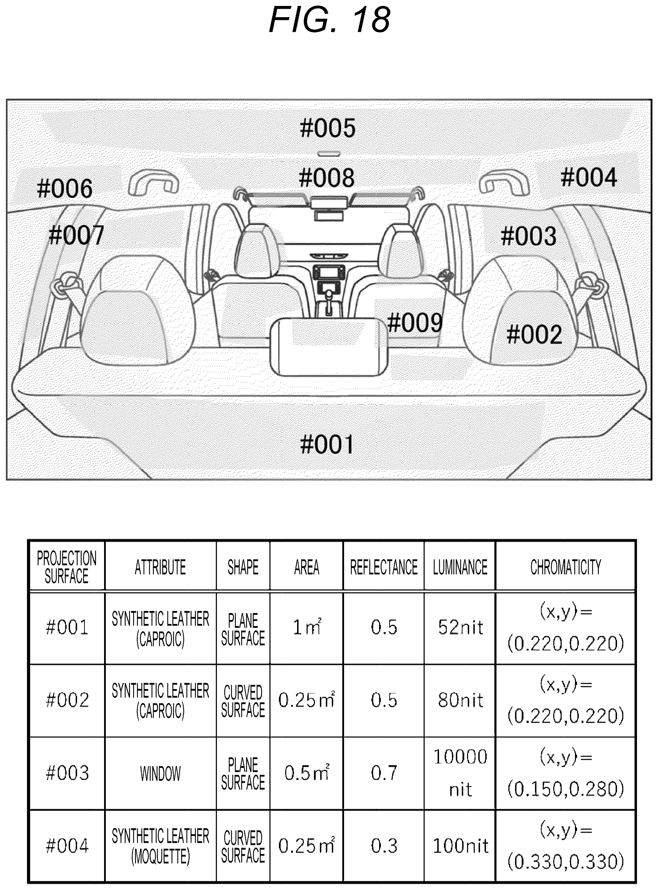

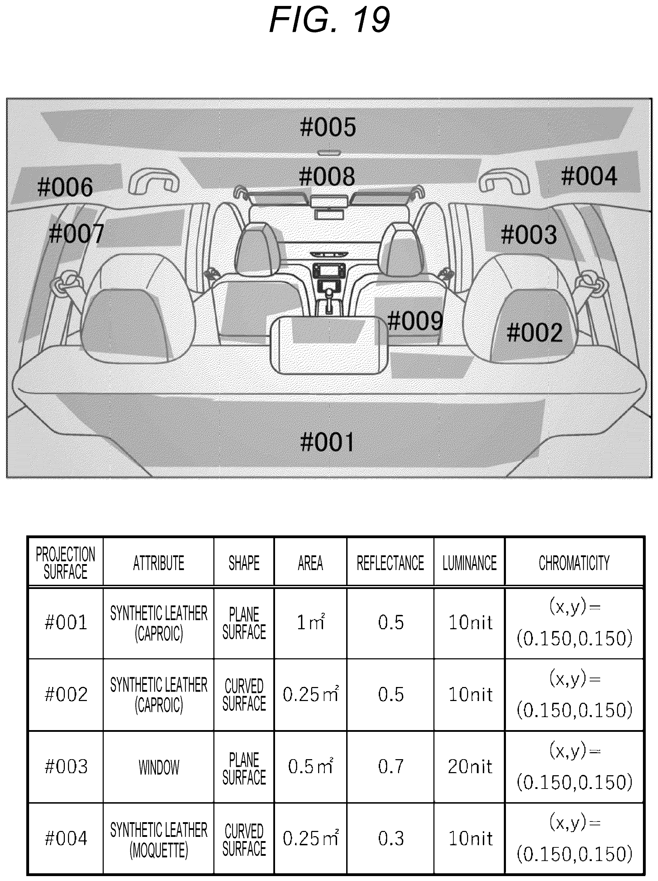

Subsequently, an effect that the projection system 1600 is equipped with the projection surface definition function will be specifically described by taking a case of being mounted on a vehicle as an example. However, in the projection environment recognition unit 1603, it is assumed that the projection surface database is updated in real time (alternatively, in a short control cycle) on the basis of the sensor information acquired by the input unit 1601 from moment to moment. Fig. 18 illustrates a projection surface database in which the projection surface detected inside the vehicle in the daytime and the characteristic data of each projection surface defined in the daytime are stored. Furthermore, Fig. 19 illustrates a projection surface database in which the projection surface detected inside the vehicle at night and the characteristic data of each projection surface defined at night are stored.

Here, an example will be considered in which when the content selection unit 1603-1 selects content having a recommended screen size of 0.45 m$^2$, an optimum projection surface is determined from among the projection surfaces #001 to #004 inside the vehicle illustrated in Fig. 13. However, the luminance of the projection device 1610 is set to 500 ml, the recommended screen size of the content is set to 0.45 m$^2$, and the maximum area occupancy (the ratio of the effective projection area that can be actually projected in the entire projection range that can be projected by the projection device 1610) is set to 10%. Then, the projection surface determination unit 1604-2 prioritizes the projection surfaces on the basis of the following conditions (1) and (2).

(1) Same as or higher than the content recommended screen size, and closest to the content recommended screen size

(2) Contrast between the content and the projection surface is 2:1 or more.

First, a case where the projection surface of the content is determined on the basis of the projection surface database defined in the daytime will be described. In the daytime, two projection surfaces #003 and #001 are selected in order of being closest to the content recommended screen size from the above condition (1) on the basis of the projection surface database of Fig. 18. Subsequently, the content luminance at the time of projection on the projection surfaces #001 and #003 will be calculated. The content luminance at the time of projection on the projection surface #001 is 1768 nits as shown in the following formula (9). Then, with reference to Fig. 18, the luminance of the projection surface #001 in the daytime is 52 nits. Therefore, the contrast between the content and the projection surface #001 is 1768:52 = 34:1, and it can be seen that the projection surface #001 in the daytime also satisfies the above condition (2). [Math. 9]

$$\frac{500 \text{ (projection device luminance)} \times 0.5 \text{ (projection surface reflectance)}}{\pi \times 0.45 \text{ (content recommended area)}} \times \frac{100}{10 \text{ (maximum area occupancy)}} = 1768 \text{ nit}$$

$$\ldots (9)$$

On the other hand, the content luminance at the time of projection on the projection surface #003 is 2475 nits as shown in the following formula (10). Then, with reference to Fig. 18, the luminance of the projection surface #003 in the daytime is 10000 nits. Therefore, the contrast between the content and the projection surface #003 is 0.24:1, and it can be seen that the projection surface #003 in the daytime does not satisfy the above condition (2). Therefore, in the daytime, the projection surface determination unit 1604-2 determines the projection surface #001, which satisfies both the conditions (1) and (2), as the projection surface suitable for the projection of the content. [Math. 10]

$$\frac{500 \text{ (projection device luminance)} \times 0.7 \text{ (projection surface reflectance)}}{\pi \times 0.45 \text{ (content recommended area)}} \times \frac{100}{10 \text{ (maximum area occupancy)}} = 2475 \text{ nit}$$

$$\ldots (10)$$

Subsequently, a case where the projection surface of the content is determined on the basis of the projection surface database defined at night will be described. At night, the two projection surfaces #003 and #001 are selected in order of being closest to the content recommended screen size from the above condition (1) on the basis of the projection surface database in Fig. 19. Subsequently, the content luminance at the time of projection on the projection surfaces #001 and #003 will be calculated. The content luminance at the time of projection on the projection surface #001 is 1768 nits as shown in the above formula (9), but with reference to Fig. 19, the luminance of the projection surface #001 at night is 10 nits. Therefore, the contrast between the content and the projection surface #001 is 177:1, and it can be seen that the projection surface #001 also satisfies the above condition (2) even at night.

Furthermore, the content luminance at the time of projection on the projection surface #003 is 2475 nits as shown in the above formula (10), but with reference to Fig. 19, the luminance of the projection surface at night is 20 nits. Therefore, the contrast between the content and the projection surface #003 is 123:1, and the projection surface #003 also satisfies the above condition (2) even at night. Therefore, at night, the projection surface determination unit 1604-2 determines the projection surface #003 closest to the content recommended area as the projection surface suitable for the projection of the content.

As described above, in the projection system 1600, the projection surface determined for the same content varies on the basis of the projection environment sensed in real time such as daytime and nighttime. That is, in the projection system 1600, since the projection surface more suitable for the content selected for the user can be dynamically determined by combining the projection surface definition unit 1603-2 and the projection surface determination unit 1604-2, it is possible to flexibly perform projection with higher usability.

C-7. Correction of Projection Surface

The projection system 1600 illustrated in Fig. 16 has a function of correcting the projection parameters such as on the content selected by the content selection unit 1604-1 and the projection surface determined by the projection surface determination unit 1604-2 in order to maintain the projection quality. Furthermore, when the luminance and chromaticity of the projected video are greatly different from those of the original content due to the characteristics of the projection surface, which is the background, the projection parameter correction unit 1605 performs signal processing so that the luminance and chromaticity of the projected video becomes closer to the original luminance and chromaticity.

In section C-7, a correction function of the projection parameters performed by the projection parameter correction unit 1605 on the content selected by the content selection unit 1604-1, the projection surface determined by the projection surface determination unit 1604-2, and the like will be described.

C-7-1. Limitation of Projection Surface

First, in section C-7-1, a function will be described in which the projection parameter correction unit 1605 imposes a restriction on the projection surface determined by the projection surface determination unit 1604.

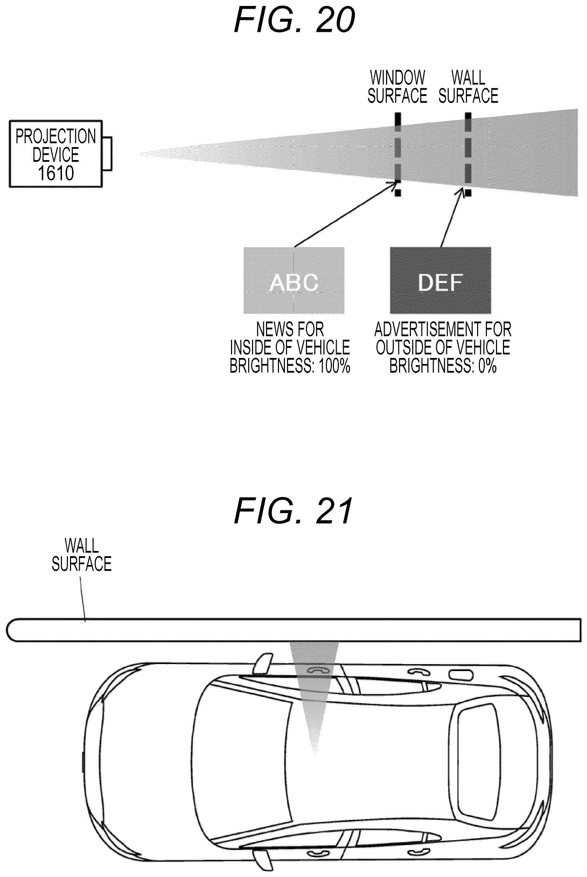

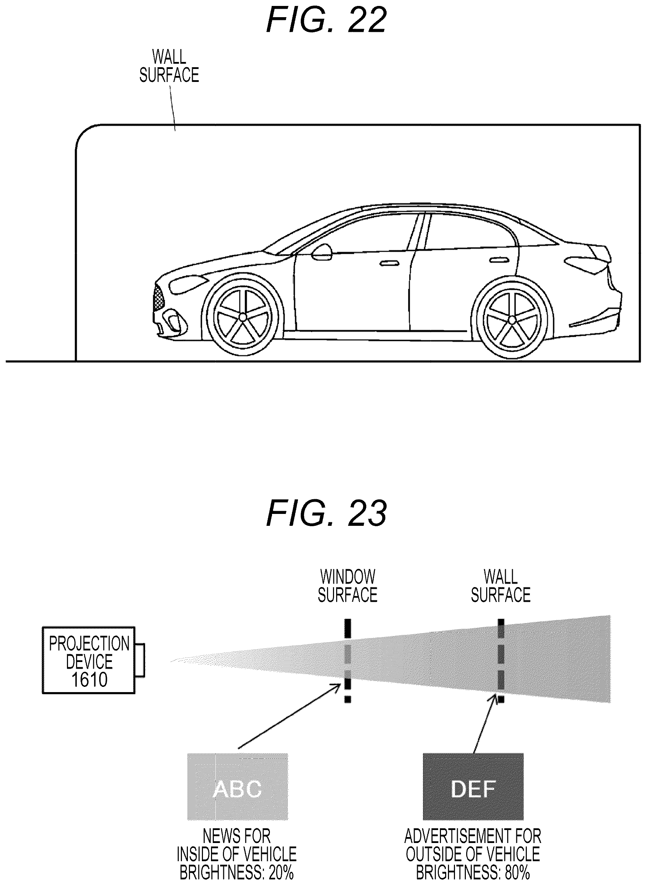

The projection device 1610 can simultaneously project a plurality of projection surfaces different in the depth direction by the phase modulation scheme. However, as illustrated in Fig. 20, in a case where the distance between the two different projection surfaces 2001 and 2002 is smaller than a design value, the projection device 1610 may not be able to switch the video because the projection surface on the far side is too close. Specifically, Figs. 21 and 22 illustrate cases where, when a vehicle is parked or stopped in a parking space near a wall surface such as a fence, the projection surface determination unit 1604-2 determines the window surface of the vehicle window and the wall surface in the vicinity of the vehicle window as the projection surface (Fig. 21 illustrates a state in which a vehicle parked in the vicinity of a wall surface is viewed from above, and Fig. 22 illustrates a state in which the vehicle is viewed from the side).

Furthermore, in the examples illustrated in Figs. 20 to 22, two projection surfaces in which the distance therebetween is small are illustrated, but it is also assumed that the distances of three or more projection surfaces are smaller than the design value. In such a case, the projection parameter correction unit 1605 may pick up two of each of a plurality of projection surfaces (a vehicle window and a wall surface immediately adjacent to the vehicle window, or the like) and compare the two with each other to determine a projection surface to be prioritized. For example, the projection parameter correction unit 1605 gives priority to the projection surface closer to the user. In a case where the projection system 1600 is mounted on a vehicle as illustrated in Figs. 21 to 22, the projection parameter correction unit 1605 may prioritize a projection surface inside the vehicle. This is because if a wall surface outside the vehicle is also projected, a video projected on the wall surface and a video on the near side, that is, on the projection surface inside the vehicle are mixed, whereby it is difficult to see the video. In the example illustrated in Fig. 20, the projection parameter correction unit 1605 may correct the ratio of brightness to be distributed to the projection surface 2001 on the near side (window surface of the vehicle window) and the projection surface 2002 on the far side (wall surface outside the vehicle) to 100%:0%.

Furthermore, the projection parameter correction unit 1605 may impose the following restrictions (1) to (3) on the projection surface.

(1) In a case where the number of projection surfaces is close to the design value of the projection device 1610, the projection parameter correction unit 1605 narrows down the number of projection surfaces to a predetermined number or less according to a predetermined prioritization rule. For example, the projection parameter correction unit 1605 may preferentially select the projection surface closer to the user. In a case where the projection system 1600 is mounted on a vehicle, the projection parameter correction unit 1605 may preferentially select a projection surface inside the vehicle.

(2) In a case where the projection light amount allocated to the projection surface exceeds the design value of the projection device 1610, the projection parameter correction unit 1605 may perform correction so as to reduce the projection area of the projection surface according to a predetermined prioritization rule. For example, the projection size of each projection surface may be uniformly reduced, or the projection size may be reduced in order from the projection surface closer to the user.

(3) When the area of the projection surface is smaller than the recommended screen size of the content, the projection parameter correction unit 1605 performs processing of reducing the screen size of the original content.

C-7-2. Priority Determination on Projection Surface

In section C-7-2, a function will be described in which the projection parameter correction unit 1605 determines priorities of the plurality of projection surfaces determined by the projection surface determination unit 1604-2 will be described.

In a case where the projection light amount allocated to each projection surface exceeds the design value of the projection device 1610, the projection parameter correction unit 1605 adjusts the distribution of the luminance to each projection surface according to a predetermined prioritization rule. Examples of the prioritization rule include the following rules (1) and (2). However, the following rules are merely examples, and other rules can be determined.

(1) On the basis of position information, advertisement is prioritized in a place with a high priority set by the user.
(2) Luminance at a position close to the user is prioritized.

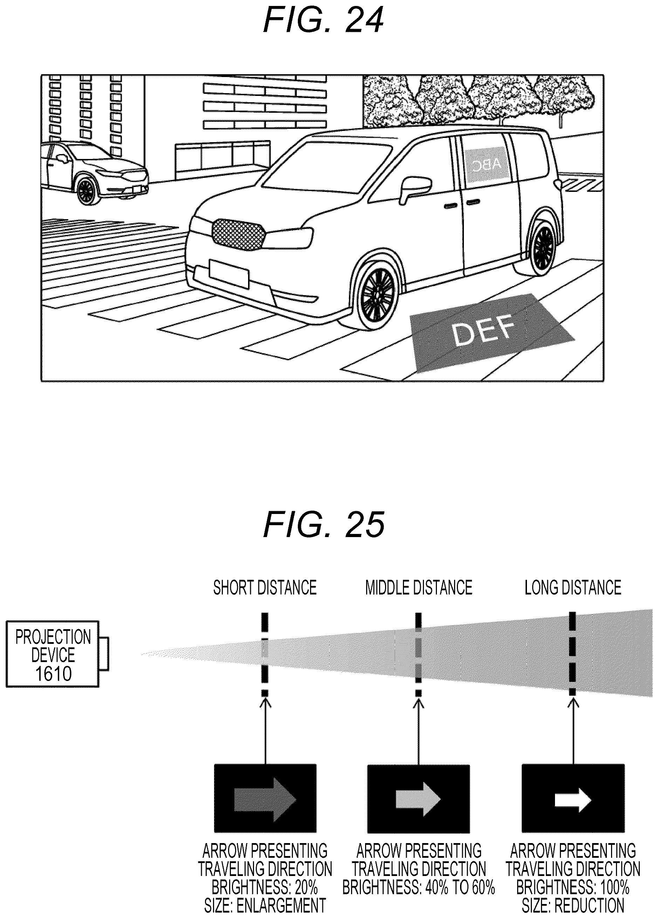

Fig. 23 illustrates an operation example of the projection parameter correction unit 1605 in a case where the content selection unit 1604-1 selects each piece of content of news "ABC" for the inside of the vehicle and an advertisement "DEF" for the outside of the vehicle, and the projection surface determination unit 1604-2 further determines the window surface as the projection surface of the news "ABC" for the inside of the vehicle and determines the road surface as the projection surface of the advertisement "DEF" for the outside of the vehicle. For example, in a case where a vehicle is traveling in a downtown where a large amount of advertisement revenue can be expected by displaying outside the vehicle in the daytime when brightness is required, the allocation of the projection light amount to each projection surface (or each piece of content) is corrected with priority given to the projection of the advertisement "DEF" for the outside of the vehicle over the news "ABC" for the inside of the vehicle. In the example illustrated in Fig. 23, the projection parameter correction unit 1605 allocates 20% of the projection light amount to the news "ABC" for the inside of the vehicle and allocates 80% of the projection light amount to the advertisement "DEF" for the outside of the vehicle. Furthermore, Fig. 24 illustrates a state in which when a vehicle equipped with the projection system 1600 is traveling in town, news "ABC" for the inside of the vehicle is projected on a window surface of the vehicle window, and an advertisement "DEF" for the outside of the vehicle is projected on a road surface with a respective corrected projection light amount.

C-7-3. Correction of Projection Surface

In section C-7-3, a function will be described in which the projection parameter correction unit 1605 corrects the projection parameter so that the actual video projected on the projection surface is appropriate on the basis of the information obtained by the projection surface determination unit 1604-2 and the projection surface definition unit 1603-2. Examples of the correction function include geometric correction, luminance correction, and chromaticity correction. Hereinafter, each correction function will be described below.

C-7-3-1. Geometric Correction

The projection parameter correction unit 1605 calculates the size and shape of the video when the content selected by the content selection unit 1604-1 is actually projected on the projection surface on the basis of the relative positional relationship between the projection surface determined by the projection surface determination unit 1604-1 and the projection device 1610 and the angle of view information of the projection device 1610. In a case where the projection system 1600 is mounted on a vehicle, the relative position between the projection surface and the projection device 1610 can be calculated on the basis of current position information of the vehicle measured by a GPS sensor or the like, predicted route information of the vehicle, or the like. Then, the projection parameter correction unit 1605 corrects the projection parameter so as to minimize the difference between the recommended size and shape of the content and the calculated size and shape of the projected video. The projection parameter correction unit 1605 also performs what is-called trapezoid correction accompanying the inclination of the projection surface.

C-7-3-2. Luminance Correction

In a case where there is a difference between the luminance value of the original signal of the content and the luminance value projected on the projection surface, the projection parameter correction unit 1605 corrects the video signal so that the projected luminance value becomes closer to the luminance value of the original signal. Of course, the projection parameter correction unit 1605 may perform correction such that the projected luminance value becomes closer to the luminance value of the original signal using means other than the signal processing.

The projection parameter correction unit 1605 may calculate the luminance value projected on the projection surface in advance on the basis of the information in the projection surface database (attribute, shape, reflectance, luminance, chromaticity, and the like of the projection surface) and the design value of the projection device 1610. Alternatively, the projection parameter correction unit 1605 may receive sensor information obtained by sensing the luminance value of the actually projected projection surface from the input unit 1601 to be used for the luminance correction.

Furthermore, the projection parameter correction unit 1605 calculates the possible output of the projection device 1610 from the total number of projection surfaces on which the content is projected and the content to be projected, and further calculates the feasible luminance in consideration of the reflectance of the projection surface. Then, the feasible luminance is compared with the luminance of the original signal of the content, and in a case where the feasible luminance is less than the luminance of the original signal, the output luminance is reduced to the feasible luminance, or setting values (current value, duty value, and the like) of the projection device 1610 at that time is calculated.

C-7-3-3. Chromaticity Correction

In a case where there is a difference between the chromaticity of the original signal of the content and the chromaticity projected on the projection surface, the projection parameter correction unit 1605 performs chromaticity correction on the color space of the video signal such that the projected chromaticity becomes closer to the chromaticity of the original signal. Of course, the projection parameter correction unit 1605 may perform chromaticity correction such that the projected chromaticity becomes closer to the chromaticity of the original signal using means other than the signal processing. Note that, in a case where the chromaticity of a certain pixel in the content exceeds the displayable chromaticity of the projection device 1610, the projection parameter correction unit 1605 corrects the chromaticity of the pixel so as to match the displayable chromaticity of the projection device 1610.

The projection parameter correction unit 1605 may calculate the chromaticity projected on the projection surface in advance on the basis of the information in the projection surface database (attribute, shape, reflectance, luminance, chromaticity, and the like of the projection surface) and the design value of the projection device 1610. Alternatively, the projection parameter correction unit 1605 may receive sensor information obtained by sensing the chromaticity of the actually projected projection surface from the input unit 1601 to be used for the chromaticity correction.

White balance correction is performed with priority given to light source control of the projection device 1610. Therefore, the projection parameter correction unit 1605 may calculate the light source control parameter and pass the information to the projection device 1610.

Furthermore, the projection parameter correction unit 1605 may correct the projection parameter by either a chromaticity priority method or a luminance priority method. In the case of priority of chromaticity, the correction processing is performed in the order of chromaticity correction → luminance correction, but in the case of priority of luminance, the order of processing is not limited thereto.

C-7-3-4. Specific Examples

In section C-7-3-4, a specific example of the projection parameter correction performed by the projection parameter correction unit 1605 will be described.

Fig. 25 illustrates a method in which the projection parameter correction unit 1605 performs correction according to the distance from the projection device 1610. In a case where a video is projected at three locations of a short distance, a middle distance, and a long distance, the projection parameter correction unit 1605 performs luminance correction such that the longer the distance, the brighter the luminance, and the luminance is dark at a short distance. Furthermore, in a case where the projection surface is bright, the luminance of the projected video on the projection surface may be reduced. Furthermore, as geometric correction, the projection parameter correction unit 1605 performs enlargement and reduction processing on the video such that the size of the video projected on each projection surface is constant.

Fig. 25 illustrates an example in which arrows for presenting the traveling direction (or navigation) are projected on projection surfaces at three locations of a short distance, a middle distance, and a long distance. The projection parameter correction unit 1605 first allocates 20%, 40%, and 100% of the projection light amounts to the respective projection surfaces at a short distance, a middle distance, and a long distance. Here, in a case where the projection surface is bright, the contrast between the background (projection surface) and the projected content is small, and thus, correction for adjusting the contrast by increasing the luminance is performed. In the example illustrated in Fig. 25, since the projection surface at the middle distance is bright, correction is performed to increase the allocated 40% of the projection light amount to 60%. With such luminance correction, the projection light amount can be effectively distributed according to the distance and the brightness of the projection surface, so that high luminance of the projection device 1610 can be realized. Furthermore, as geometric correction, the projection parameter correction unit 1605 also performs trapezoid correction of performing enlargement processing on the video projected on the projection surface at a short distance and performing reduction processing on the video projected on the projection surface at a long distance. As a result, the size of the video projected on each of projection surfaces at a short distance, a middle distance, and a long distance becomes constant.

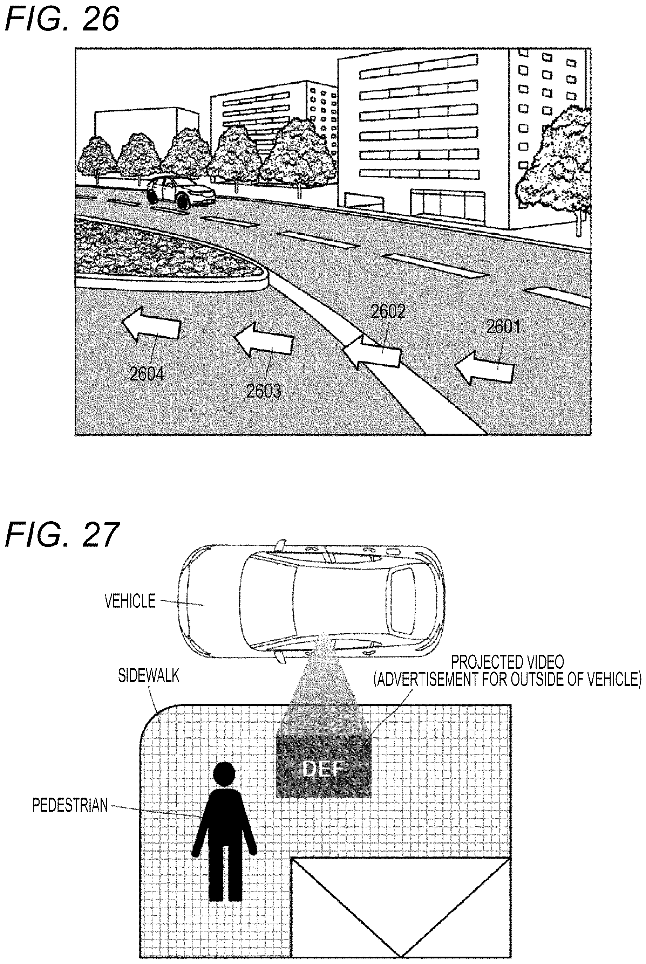

Fig. 26 illustrates a specific example of performing projection parameter correction in a case where the projection system 1600 is mounted on a vehicle (not illustrated in Fig. 26). The drawing is an example in which, when the vehicle approaches a Y-shaped road branching from a main road to a left side road, arrows 2601 to 2604 presenting a traveling direction are projected on a plurality of portions on the road surface. The projection parameter correction unit 1605 first allocates a projection light amount according to the distance to each projection surface so as to make the projection surface bright on the far side and dark on the near side. Therefore, the projection light amount is allocated in the order of the arrow 2601, the arrow 2602, the arrow 2603, and the arrow 2604. Moreover, since the projection surface on the side groove is brighter than the projection surface on the asphalt, correction for adjusting the contrast by increasing the projection light amount allocated to the arrow 2602 projected on the side groove is performed. With such luminance correction, the projection light amount can be effectively distributed according to the distance and the brightness of the projection surface, so that high luminance of the projection device 1610 can be realized. Furthermore, as geometric correction, the projection parameter correction unit 1605 performs geometric correction according to the inclination and shape of the projection surface, such as trapezoid correction. Furthermore, the projection parameter correction unit 1605 performs enlargement processing on the video projected on the projection surface at a short distance and performs reduction processing on the video projected on the projection surface at a long distance such that the size of the video projected on each projection surface is constant (performs reduction and enlargement processing in order of the arrow 2601, the arrow 2602, the arrow 2603, and the arrow 2604). With these projection parameter corrections, it is possible to project the arrows 2601 to 2604, which look the same from the user (for example, a driver sitting in a driver's seat) on a plurality of the projection surfaces having different distances, attributes, and the like on the road surfaces.

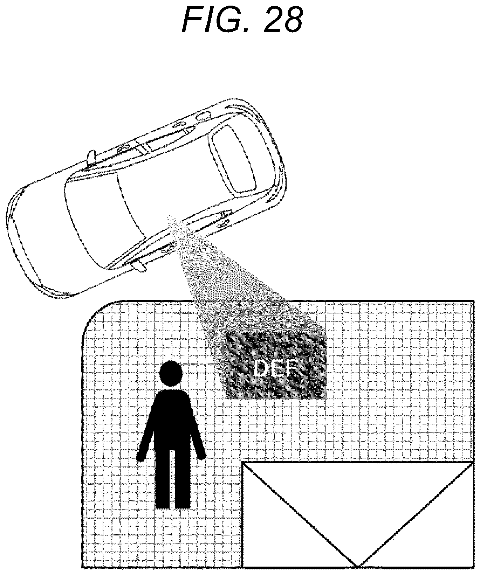

Figs. 27 and 28 illustrate how the projection system 1600 mounted on a vehicle projects an advertisement for the outside of the vehicle on a sidewalk toward a pedestrian in the vicinity of the vehicle. However, Fig. 27 illustrates a state in which an advertisement for the outside of the vehicle is projected from the vehicle onto the sidewalk at a certain time T, and Fig. 28 illustrates a state in which the advertisement for the outside of the vehicle is projected from the vehicle onto the sidewalk at a time T + ΔT that is advanced by ΔT. In the example illustrated in Fig. 27, at time T, the content (advertisement for the outside of the vehicle) selected for the pedestrian by the content selection unit 1604-1 is projected on the projection surface on the sidewalk determined for the pedestrian by the projection surface determination unit 1604-2. During the period ΔT, the vehicle moves in the traveling direction, and is further about to turn left at the intersection. Therefore, the distance from the projection device 1610 to the projection surface on the sidewalk increases, and the inclination of the projection surface with respect to the optical axis also changes. Therefore, the projection parameter correction unit 1605 corrects (brightens) the projection light amount allocated to the projection surface on the sidewalk according to the change in the distance to the projection surface, and also performs geometric correction according to the inclination of the projection surface with respect to the optical axis. The relative position between the projection surface and the projection device 1610 can be calculated on the basis of current position information of the vehicle measured by a GPS sensor or the like, predicted route information of the vehicle, or the like. As a result, as illustrated in Fig. 28, since the coordinates of the projection surface on the sidewalk with respect to the pedestrian and the size of the projected video become constant, the pedestrian can continue to see the same advertisement for the outside of the vehicle between time T and time T + ΔT.

In the case of continuously presenting the content, the projection surface (sidewalk) allocated to the user (pedestrian) is fixed, and the projection parameter correction unit 1605 updates the projection parameter (geometric correction, luminance correction, chromaticity correction) for each frame, so that information presentation securing the usability can be performed even while the vehicle on which the projection system 1600 is mounted is moving.

C-8. Modality of Input Information

Heretofore, the description is given assuming that the input unit 1601 mainly inputs image information from an image sensor, a distance sensor, or the like, and the recognition of the user by the user recognition unit 1602-1 and the definition of the user information by the user definition unit 1602-2 are performed.

The input unit 1601 may further acquire sound data using a microphone or the like. In such a case, it is possible to more accurately grasp the attribute of the user and the state of the user by acquiring conversation, daily life sounds uttered by the user, other environmental sounds, and the like from the sound data.

C-9. Detection of Meta Information from Device Possessed by User

It has become common for users to carry multifunctional information terminals such as smartphones, tablets, and smartwatches. This type of device often stores meta information of various users, such as schedule information, e-ticket information, and information of services and facilities in which accounts are registered.

Therefore, the input unit 1601 may acquire the meta information of the user from a device possessed by the user. In such a case, the user definition unit 1602-2 can more accurately define the user information, and the content selection unit 1604-1 can select the content suitable for the attribute of the user and the state of the user.

D. Application

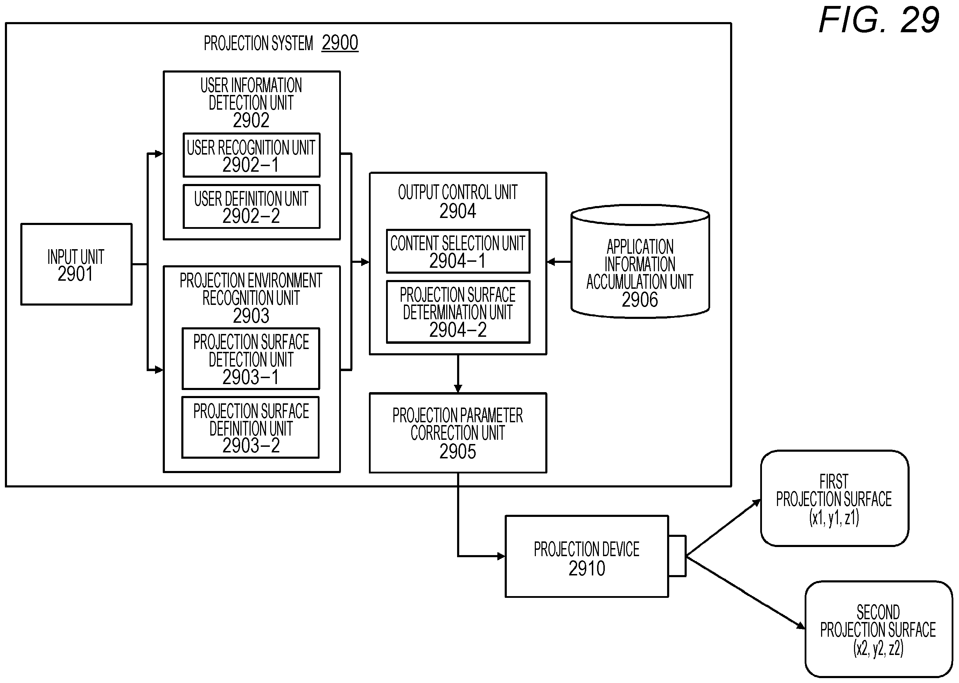

Fig. 29 schematically illustrates a configuration of a projection system 2900 to which the present disclosure is applied. The illustrated projection system 2900 includes an input unit 2901, a user information detection unit 2902, a projection environment recognition unit 2903, and an output control unit 2904, a projection parameter correction unit 2905, and an application information accumulation unit 2906. However, the same components as those included in the projection system 1600 illustrated in Fig. 16 are denoted by the same names. The projection system 2900 has a main feature in that application information including allocation of a projection surface and parameters related to content selection for each application (or use of the system) is managed, so that the projection system can be deployed to a wide range of applications (can be used for various scenes).

The input unit 2901 inputs sensor information acquired by a sensor installed in a space within a range that can be projected by the projection system 2900. Alternatively, the input unit 2901 may be the sensor itself installed in the space. The input unit 2901 inputs, for example, sensor information from an in-vehicle sensor installed inside the vehicle. In a case where the user recognition unit 2902 also recognizes a user outside the vehicle, the input unit 2901 also inputs sensor information outside the vehicle.

The user information detection unit 2902 includes a user recognition unit 2902-1 and a user definition unit 2902-2. The user recognition unit 2902-1 detects the number of users, the position of the user, and the direction of the face and the line-of-sight of the user from the sensor information supplied from the input unit 2901 using, for example, the posture estimation model such as Openpose. Then, the user definition unit 2902-2 defines the characteristic and state of the user recognized by the user recognition unit 2902-1, and stores the characteristic and state defined for each user in the entry of the corresponding user in the user characteristic database.

The projection environment recognition unit 2903 includes a projection surface detection unit 2903-1 and a projection surface definition unit 2903. On the basis of the sensor information supplied from the input unit 2901, the projection surface detection unit 2903-1 detects, as a projection surface, a portion that can be actually projected by the projection device 2910 in a space within a range that can be projected by the projection system 2900 (the same as above). In the projection system 2900, a projection surface database is used to manage the characteristics of each projection surface detected by the projection surface detection unit 2903-1. An entry of each projection surface detected by the projection surface detection unit 2903-1 is provided in the projection surface database. A projection surface definition unit 2903-2 recognizes the characteristics such as attribute, shape, area, reflectance, chromaticity, and luminance of the projection surface detected by the projection surface detection unit 2903-1 and stores the information in the corresponding entry of the projection surface database.

The output control unit 2904 includes a content selection unit 2904-1 and a projection surface determination unit 2904-2. The content selection unit 2904-1 selects content to be displayed to the user on the basis of the user information recognized by the user recognition unit 2902. Furthermore, the projection surface determination unit 2904-2 determines a projection surface on which the video of the content is projected from among the projection surfaces detected by the projection surface detection unit 2903-1. The information regarding the content selected by the content selection unit 2904-1 and the projection surface of the content determined by the projection surface determination unit 2904-2 is stored in the user characteristic database (described above). However, the content selection unit 2904-1 selects the content according to a provision related to content selection on the basis of the corresponding application information managed by the application information accumulation unit 2906. Furthermore, the projection surface determination unit 2904-2 determines the projection surface according to a provision related to allocation of the projection surface on the basis of the corresponding application information.

In order to maintain the projection quality, the projection parameter correction unit 2905 performs correction of projection parameters such as limitation and priority determination of a projection surface when a video is projected from the projection device 2910, geometric correction of the projected video, and luminance and chromaticity correction (for details, refer to section C-7 above).

The projection device 2910 is a phase modulation type projection device as described in the above section B, and is a projection device capable of simultaneously projecting on a plurality of projection surfaces different in the vertical and horizontal directions and the depth direction. Display image generation processing for generating an image to be projected by the projection device 2910 is performed on the basis of the projection size, the projection luminance, and the projection chromaticity corrected by the projection parameter correction unit 2905. This display image generation processing may be performed by the output control unit 2904 or may be performed by the projection parameter correction unit 2905. Since the display image generation processing is as described in the above section C-5, the detailed description thereof will be omitted here. The projection device 2910 projects a video on the basis of the information determined by the display image generation processing.

The application information accumulation unit 2906 manages the application information database by storing application information including allocation of a projection surface and parameters related to content selection for each application (or use of the system) as a database. Then, the content selection unit 2904-1 selects content according to a provision related to content selection on the basis of the corresponding application information. Furthermore, the projection surface determination unit 2904-2 determines the projection surface according to a provision related to allocation of the projection surface on the basis of the corresponding application information.

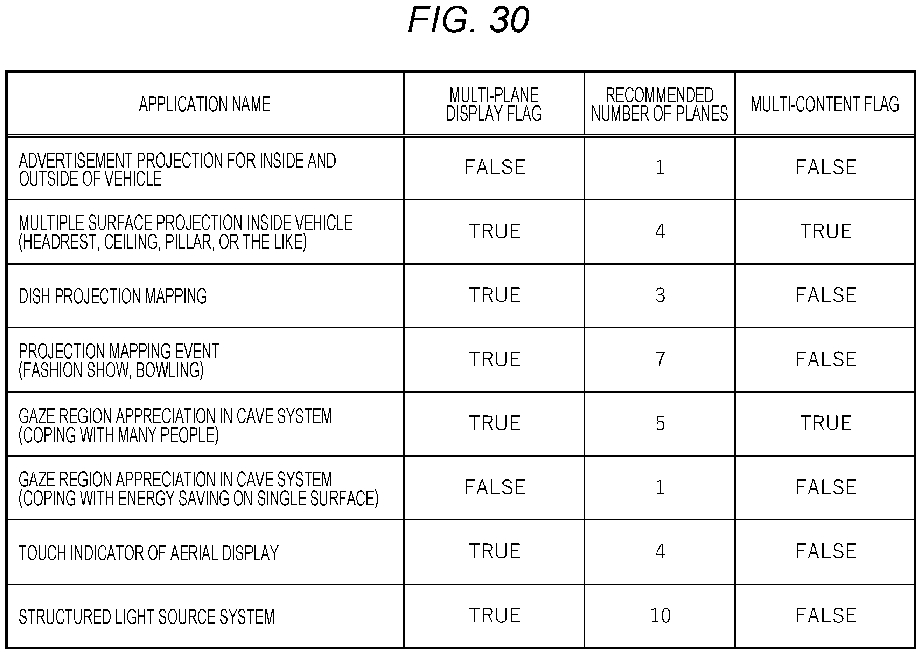

Fig. 30 illustrates a configuration example of an application information database managed by the application information accumulation unit 2906. The application information database illustrated in the drawing stores application information related to seven applications of "advertisement projection inside and outside a vehicle", "multi-surface projection inside a vehicle (headrest, ceiling, pillar, or the like)", "dish projection mapping", "projection mapping event (fashion show, bowling)", "gaze region appreciation in CAVE system (coping with many people)", "gaze region appreciation in CAVE system (coping with energy saving on a single surface)", "touch indicator of aerial display", and "structured light source system".

In the illustrated application information database, a multi-plane display flag is a flag indicating whether to allocate a plurality of projection surfaces to one user. An application in which the flag is TRUE indicates that multiple projection surfaces are allocated to one user, and an application in which the flag is FALSE indicates that only one projection surface is allocated to one user.

Furthermore, the recommended number of planes is the number of projection surfaces allocated per user. In the case of an application in which the multi-plane display flag is TRUE, the number of projection surfaces used by each user can be defined in advance. On the other hand, in the case of an application in which the multi-plane display flag is FALSE, the recommended number of planes inevitably is one.

Furthermore, in a case where information is presented on a plurality of projection surfaces (however, in a case where the multi-plane display flag is TRUE), a multi-content flag is a flag indicating whether or not the information projected on all the projection surfaces is a series of pieces of content. An application in which the multi-content flag is FALSE indicates that the information related to all projection surfaces is presented (that is, the content is single content). Furthermore, an application in which the multi-content flag is TRUE indicates that irrelevant information is presented for each projection surface (that is, the content is multi-content).

Note that, in the application information database illustrated in Fig. 30, the assignment of the multi-plane display flag, the recommended number of planes, and the multi-content flag to each application is an example, and is not necessarily limited to the examples illustrated in Fig. 30.

D-1. Example 1

In section D-1, an example in which the projection system 2900 is applied to an application "multi-surface projection inside a vehicle" will be described.

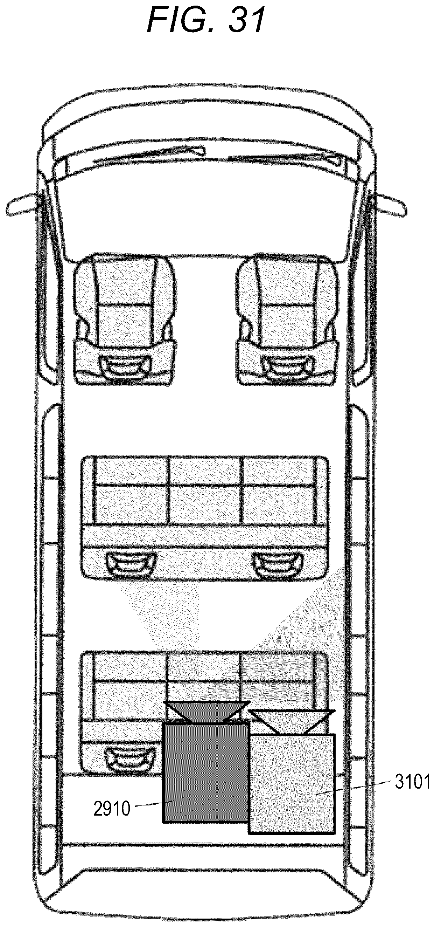

In this example, as illustrated in Fig. 31, a projection device 2910 and a sensor 3101 are installed in a rear portion inside a vehicle equipped with three rows of seats. The sensor 3101 includes an image sensor such as an RGB camera and a distance sensor, and the sensor information acquired by the sensor 3101 is input from the input unit 2901 to the projection system 2900. Furthermore, the projection device 2910 can simultaneously project on a plurality of projection surfaces different in the vertical and horizontal directions and the depth direction by the phase modulation scheme. Then, as illustrated in Fig. 30, in the application "multi-surface projection inside a vehicle", the multi-plane display flag is designated as TRUE, the recommended number of planes is designated as four, and the multi-content flag is designated as TRUE.

As illustrated in Fig. 5, the projection surface detection unit 2903-1 detects a plurality of projection surfaces on a headrest, a ceiling, a pillar, or the like. Then, the projection surface definition unit 2903-2 recognizes the characteristic of each detected projection surface to be stored in the projection surface database.

The content selection unit 2904-1 selects content to be displayed for the recommended number of planes for each target user. In the user characteristic database, a user with information presentation of Yes is a presentation target. Since the multi-content flag is designated as TRUE in the application, the content selection unit 2904-1 selects irrelevant content for the recommended number of planes (four) for each target user.

The projection surface determination unit 2904-2 performs processing of allocating a projection surface to each target user in the user characteristic database. Since the multi-plane display flag is TRUE in the application, the projection surface determination unit 2904-2 scans all the projection surfaces for each target user and determines the projection surfaces for the recommended number of planes designated in the user characteristic database for each user. However, the number of projection surfaces actually allocated to each user is determined so as not to exceed the maximum number of projection surfaces of the projection device 2910. In a case where a certain user can use more projection surfaces than the recommended number of planes, the projection surface determination unit 2904-2 determines projection surfaces corresponding to the recommended number of planes on the basis of a predetermined prioritization rule (described above).

Note that, in a case where the same projection surface is a candidate for a plurality of target users, the display information is compared between the users, and the same projection surface is determined for the plurality of target users if the display information is the same. Furthermore, in a case where the display information is different between the users, the projection surface is allocated to one user as it is, and is changed to another projection surface for the other users. In a case where no other projection surface remains, the allocation of the projection surface to the user is abandoned.

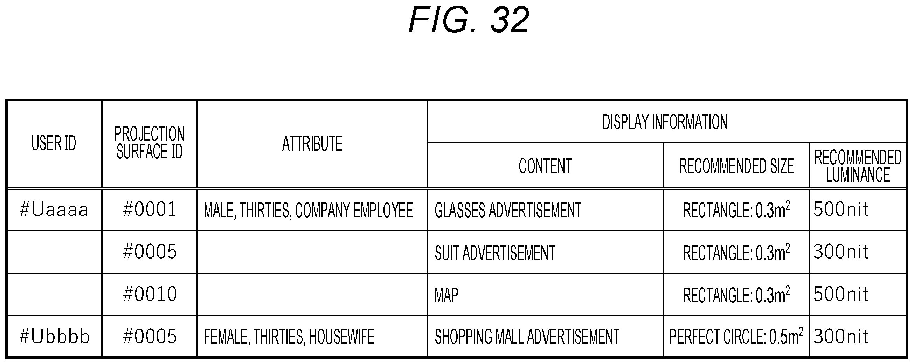

Fig. 32 illustrates an example of a user characteristic database constructed in the application "multi-surface projection inside a vehicle". However, the multi-plane display flag is TRUE, the recommended number of planes is four, and the maximum number of projection surfaces of the projection device 2910 is 10.


D-2. Example 2

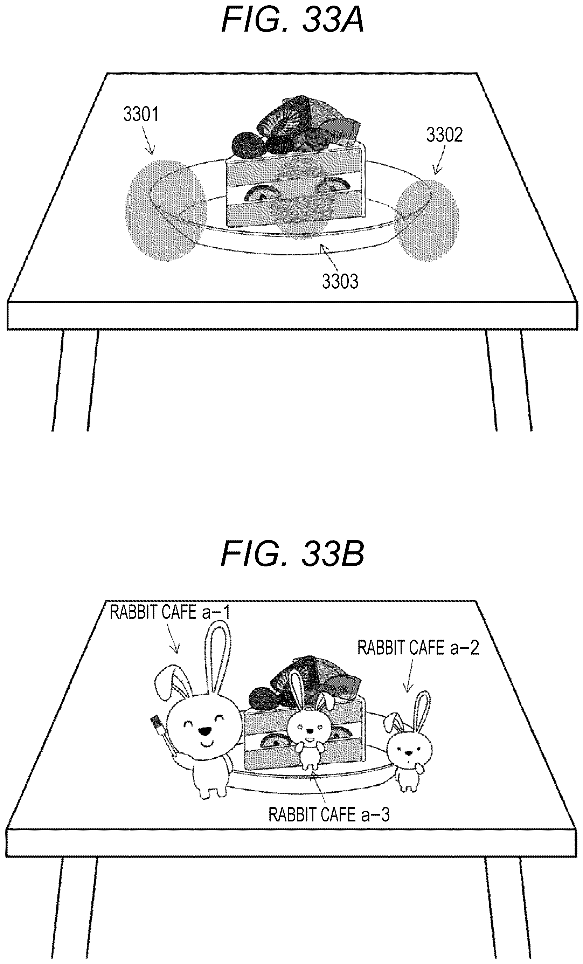

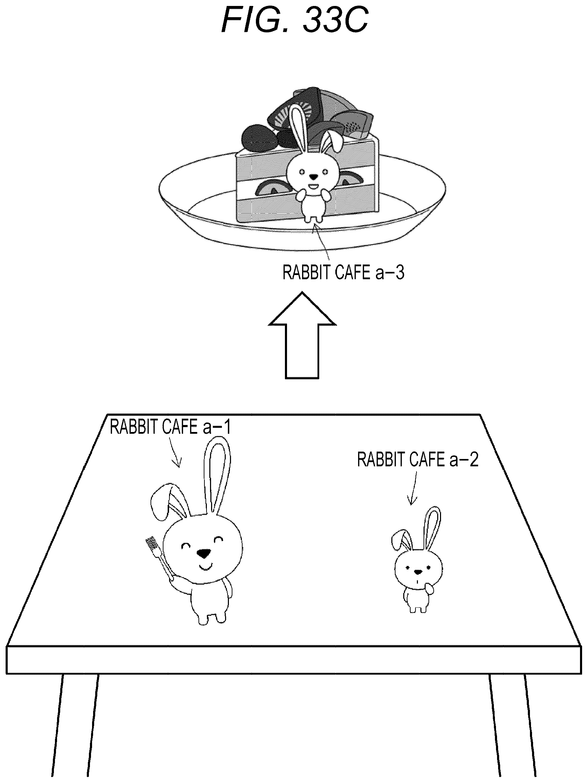

In section D-2, an example in which the projection system 2900 is applied to the application "dish projection mapping" will be described. In the "dish projection mapping", for example, as illustrated in Fig. 33, an interaction of projecting a video of a character or the like that attracts an appetite onto a plate on which a dish is served is performed. By applying the projection system 2900 to this application, even if the user lifts the plate, the video projected on the plate can be always focused.

In this example, a projection device 2910 and a sensor (an image sensor such as an RGB camera, a distance sensor, or the like) are installed on a ceiling of a room such as a kitchen (not illustrated), and the sensor information acquired by the sensor is input from the input unit 2901 to the projection system 2900. Then, as illustrated in Fig. 30, in the application "dish projection mapping", the multi-plane display flag is designated as TRUE, the recommended number of planes is designated as three, and the multi-content flag is designated as FALSE.

As illustrated in Fig. 33A, the projection surface detection unit 2903-1 detects three projection surfaces 3301 to 3303 for projecting content related to a dish (cake) in a projection environment in which a plate on which the dish (cake in the illustrated example) is served is placed on a table. Then, the projection surface definition unit 2903-2 recognizes the characteristic of each projection surface 3301 to 3303 detected to be stored in the projection surface database. In the projection environment in which the plate is placed on the table as illustrated in the drawing, the projection surface is detected on both the table and the plate.

The content selection unit 2904-1 selects content for the recommended number of planes (three) for the target user to be stored in the user characteristic database. Since the multi-content flag is designated as FALSE in the application, the content selection unit 2904-1 selects a series of three pieces of content related to the dish (cake) for each target user.

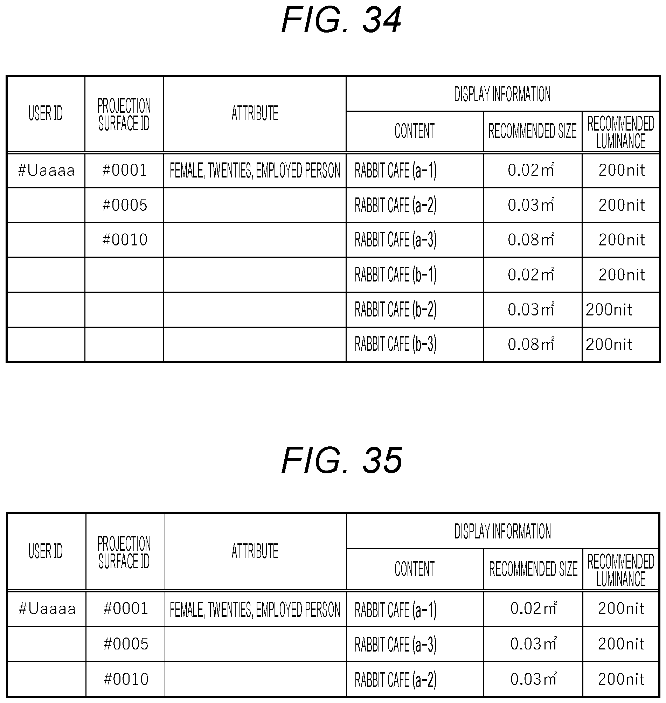

Fig. 34 illustrates a configuration example of the user characteristic database when the content selection unit 2904-1 selects a series of pieces of content "rabbit cafe" for the target user by assuming a case where only one target user (the user ID is #Uaaaa) is detected by the user information detection unit 2902. The "rabbit cafe" includes a total of six pieces of related content of a-1 to a-3 and b-1 to b-3. However, the user characteristic database illustrated in Fig. 34 is a provisional database in which content candidates are selected for the target user, and the association between the projection surface and the content has not yet been determined. Furthermore, since the "rabbit cafe" includes six pieces of related content exceeding the recommended number of planes, which is three, it is necessary to narrow the selected content to the recommended number of planes.

The projection surface determination unit 2904-2 performs processing of allocating a projection surface to the target user in the user characteristic database. Since the multi-content flag is FALSE in the application, the projection surface determination unit 2904-2 scans for the number of the series of content selected by the content selection unit 2904-1 for the target user, and allocates the projection surfaces for the recommended number of planes matching the recommended value (recommended screen size or the like) associated with the content to the target user. Then, the projection surface determination unit 2904-2 stores the projection surface allocated to each of the series of content in the corresponding entry the user characteristic database.

Note that, in a case where the same projection surface is a candidate for a plurality of target users, the display information is compared between the users, and the same projection surface is determined for the plurality of target users if the display information is the same. Furthermore, in a case where the display information is different between the users, the projection surface is allocated to one user as it is, and is changed to another projection surface for the other users. In a case where no other projection surface remains, the allocation of the projection surface to the user is abandoned.

In the provisional user characteristic database after the content selection illustrated in Fig. 34, six pieces of related content exceeding the recommended number of planes, which is three, are selected for the target user (user ID: Uaaaa). In such a case, the projection surface determination unit 2904-2 narrows down the six pieces of related content to three pieces of related content (a-1, a-3, a-2), which is the recommended number of planes, on the basis of a predetermined prioritization rule (described above), and allocate, to each piece of content, a projection surface (#0001, #0005, #0010) matching the recommended value associated with each piece of content. Fig. 35 illustrates a final user characteristic database constructed on the basis of the user characteristic database illustrated in Fig. 34. Fig. 33B illustrates a dish projection mapping example in which three pieces of related content are projected on the projection surfaces 3301 to 3303 detected by both the table and the plate. In the projection environment in which the plate is placed on the table as illustrated in Fig. 33A, two pieces of content "rabbit cafe a-1" and "rabbit cafe a-2" are projected on the projection surfaces 3301 and 3302 detected on the table, and "rabbit cafe a-3" is projected on the projection surface 3303 detected on the plate. Moreover, Fig. 33C illustrates a dish projection mapping example when the plate is lifted from the table. In the present disclosure, two pieces of content "rabbit cafe a-1" and "rabbit cafe a-2" projected on the table remain when the plate is lifted. On the other hand, the content "rabbit cafe a-3" projected on the plate is projected on the lifted plate as a video with the same size, the same luminance, and in-focus as in a state where the plate is placed on the table. Incidentally, when similar projection mapping is performed using a general projection device, only the content on the plate is reduced when the plate is lifted, and a video having high luminance and a shifted focus is obtained, which is a problem.

D-3. Example 3

In section D-3, an example in which the projection system 2900 is applied to the application "projection mapping event" to perform the moving production will be described. In normal projection mapping, a projection object serving as a screen is fixed and does not move dynamically. On the other hand, by applying the projection system 2900, it is possible to continue projection mapping with a high degree of freedom in the depth direction even when the projection object dynamically moves, whereby usability is improved.

In a case where the projection system 2900 is applied to the application "projection mapping event" to perform the moving production, as illustrated in Fig. 30, the multi-plane display flag is designated as TRUE, the recommended number of planes is designated as seven, and the multi-content flag is designated as FALSE.

In a bowling site, for example, an image sensor such as an RGB camera or a distance sensor is installed on the ceiling or other places, and the sensor information is input from the input unit 2901. The user recognition unit 2902-1 recognizes the user in the bowling site from the sensor information supplied from the input unit 2901, and the user definition unit 2902-2 defines the recognized characteristic and state of the user to be stored in the user characteristic database. The user definition unit 2902-2 defines information display as Yes for the target user to be a target of information presentation.

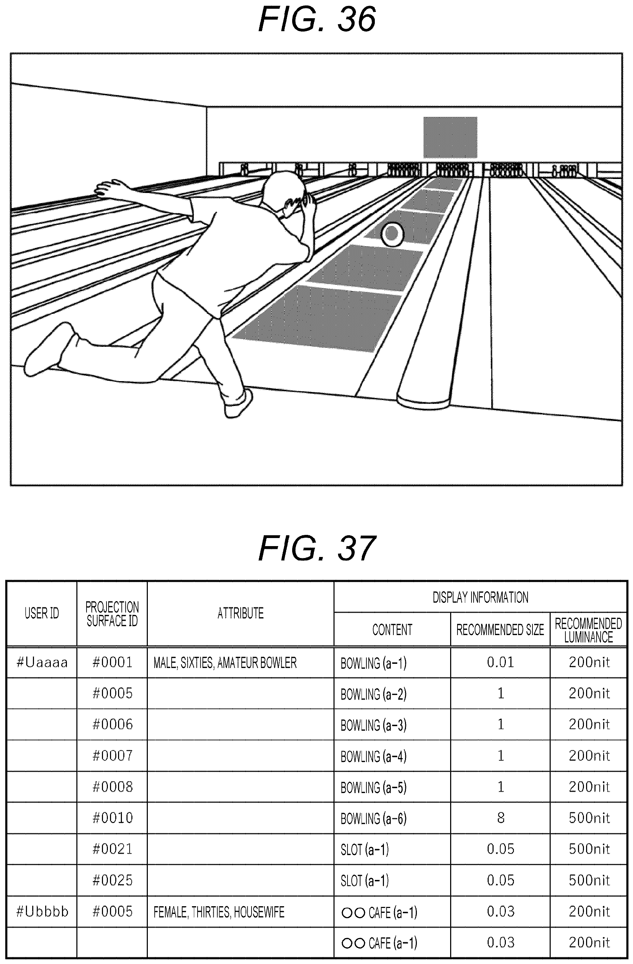

The projection surface detection unit 2903-1 detects a portion that can be projected in the bowling site as a projection surface on the basis of the sensor information supplied from the input unit 2901. In the application, not only an object that does not move like the floor of the lane but also the surface of an object that dynamically moves like a rolling ball is detected as a projection surface. Consequently, a video can be projected following the rolling ball, and the moving production can be performed. The projection surface definition unit 2903-2 recognizes characteristics of a projection surface such as the lane or the rolling ball to be stored in the projection surface database. Fig. 36 illustrates a plurality of projection surfaces detected on the lane and the surface of the rolling ball. In the drawing, each projection surface is displayed in gray.

The content selection unit 2904-1 selects content for the recommended number of planes (seven) for the target user. Since the multi-content flag is designated as FALSE in the application, the content selection unit 2904-1 selects a series of pieces of content for the target user. Then, the content selection unit 2904-1 stores the series of pieces of content and recommended projection surface information (recommended size, recommended luminance, and the like) for the content in the user characteristic database.

The projection surface determination unit 2904-2 performs processing of allocating a projection surface to the target user in the user characteristic database. Since the multi-content flag is designated as FALSE in the application, the projection surface determination unit 2904-2 scans for the number of series of content selected by the content selection unit 2904-1 for the target user, and allocates the projection surfaces for the recommended number of planes matching the recommended value (recommended screen size or the like) associated with the content to the target user. Then, the projection surface determination unit 2904-2 stores the projection surface allocated to each of the series of content in the corresponding entry the user characteristic database.

Fig. 37 illustrates a final user characteristic database in which a series of pieces of content selected for the target user and information on the projection surface allocated to each piece of content are stored in the application.

As illustrated in Fig. 36, in the application, by using the floor of the lane, the surface of the rolling ball, the wall surface (masking) in front, and the like as a projection surface, it is possible to present information to the target user such as a bowler who has thrown the ball. By using the projection system 2900 according to the present disclosure for the application, display can be continued with the same brightness even while the ball is rolling, and thus usability is improved.

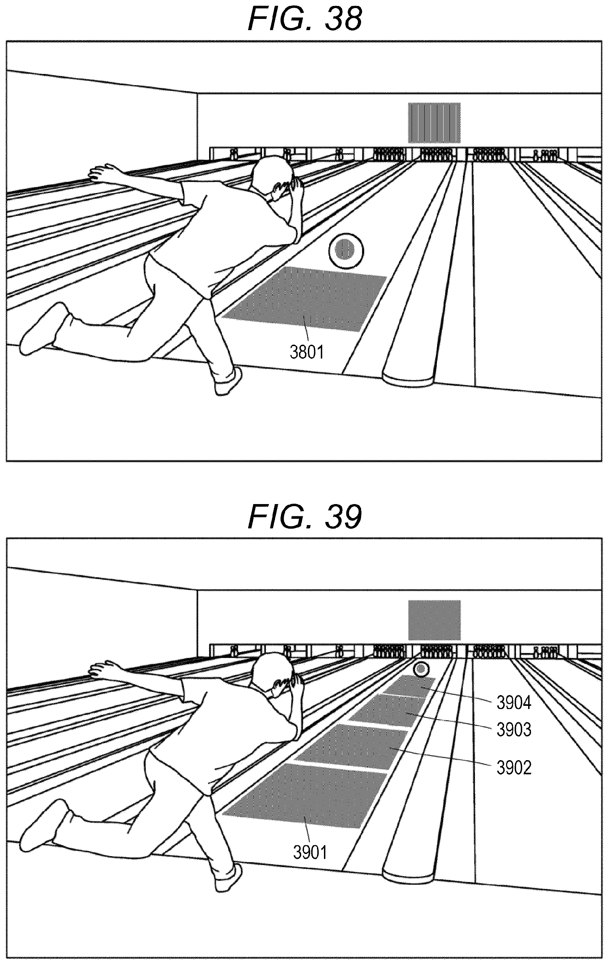

However, when a video is projected on the lane before the ball is pitched, it is difficult for the bowler to read the lane condition, and when the video is projected in front of the rolling ball, it is difficult to observe the course of the ball. Therefore, as illustrated in Figs. 38 and 39, the projection surface determination unit 2904-2 may allocate the projection surface on the lane through which the ball has passed to the content. As illustrated in Fig. 38, only one projection surface 3801 in front of the lane is allocated to the content immediately after the pitching. In this way, since the video is not projected on the lane before the ball is pitched and before the ball passes, visibility is not impaired, and usability is further improved. Thereafter, when the ball rolls on the lane and reaches near the pin deck, four projection surfaces 3901 to 3904 are allocated to the content on the lane. Therefore, as the ball moves, the region that can be projected on the lane expands, and more projection surfaces can be effectively used.

Note that, although a specific example in which the application "projection mapping event" is applied to bowling has been described in section D-3, the application can be similarly applied to other sports competitions and events other than sports to perform moving production. For example, in a fashion show, a moving production can be performed by using a floor of a runway, or a costume or a body of a model walking on the runway as a projection surface.

D-4. Example 4

In section D-4, an example in which the projection system 2900 is applied to the application "gaze region appreciation (coping with many people) in the CAVE system" will be described.

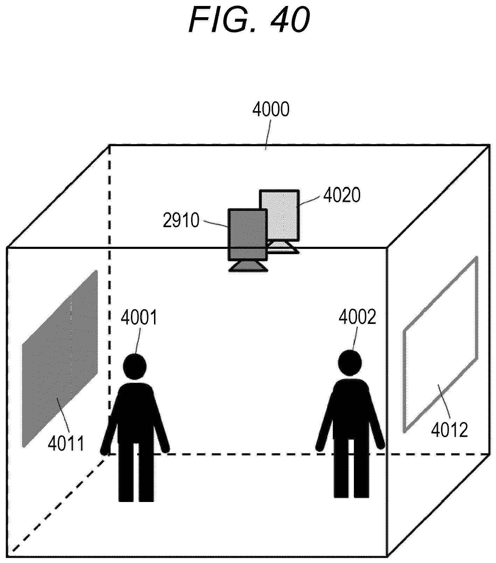

Fig. 40 illustrates an example of a CAVE system 4000. The illustrated CAVE system 4000 includes a space (such as a room) surrounded by wall surfaces on four sides, and each wall surface can be used as a projection surface. The user can enter the space and enjoy the video projected on the wall surface. By applying the projection system 2900 to the CAVE system 4000, it is possible to present the content selected for each user in a region at which each user is gazing. Furthermore, since the projection system 2900 can simultaneously project on a plurality of projection surfaces different in the vertical and horizontal directions and the depth direction by using the projection device 2910, space efficiency and cost efficiency are high and energy saving can be realized as compared with a case where the number of projectors corresponding to the number of projection surfaces is used.

In a case where the projection system 2900 is applied to the application "gaze region appreciation in CAVE system (coping with many people)", as illustrated in Fig. 30, the multi-plane display flag is designated as TRUE, the recommended number of planes is designated as five, and the multi-content flag is designated as TRUE.

An image sensor 4020 such as an RGB camera or a distance sensor is installed above or on the ceiling of the space in which the CAVE system 4000 is constructed, and captures a user and a projection environment existing in the space. The user recognition unit 2902-1 recognizes the user in the space from the sensor information supplied from the input unit 2901, and the user definition unit 2902-2 defines the recognized characteristic and state of the user to be stored in the user characteristic database. Since the user who has entered the space basically has an intention of watching the video, the user definition unit 2902-2 defines information display of all users in the space as Yes (that is, the target user). Furthermore, the projection surface detection unit 2903-1 detects four wall surfaces surrounding the space as a projection surface on the basis of the sensor information supplied from the input unit 2901. Note that one wall surface may be detected as one projection surface, or one wall surface may be divided into a plurality of regions and detected as a projection surface for each region.

The content selection unit 2904-1 selects content for the recommended number of planes (five) for each target user. Since the multi-content flag is designated as TRUE in the application, the content selection unit 2904-1 selects content irrelevant to the target user. Then, the content selection unit 2904-1 stores the content selected for each target user and recommended projection surface information (recommended size, recommended luminance, and the like) for the content in the user characteristic database.

The projection surface determination unit 2904-2 performs processing of allocating a projection surface to the target user in the user characteristic database. Since the multi-content flag is designated as TRUE in the application, the projection surface determination unit 2904-2 scans all the projection surfaces for each target user and determines the projection surfaces for the recommended number of planes designated in the user characteristic database for each user. However, the number of projection surfaces actually allocated to each user is determined so as not to exceed the maximum number of projection surfaces of the projection device 2910. In a case where a certain user can use more projection surfaces than the recommended number of planes, the projection surface determination unit 2904-2 determines projection surfaces corresponding to the recommended number of planes on the basis of a predetermined prioritization rule (described above).

Note that, in a case where the same projection surface is a candidate for a plurality of target users, the display information is compared between the users, and the same projection surface is determined for the plurality of target users if the display information is the same. Furthermore, in a case where the display information is different between the users, the projection surface is allocated to one user as it is, and is changed to another projection surface for the other users. In a case where no other projection surface remains, the allocation of the projection surface to the user is abandoned.

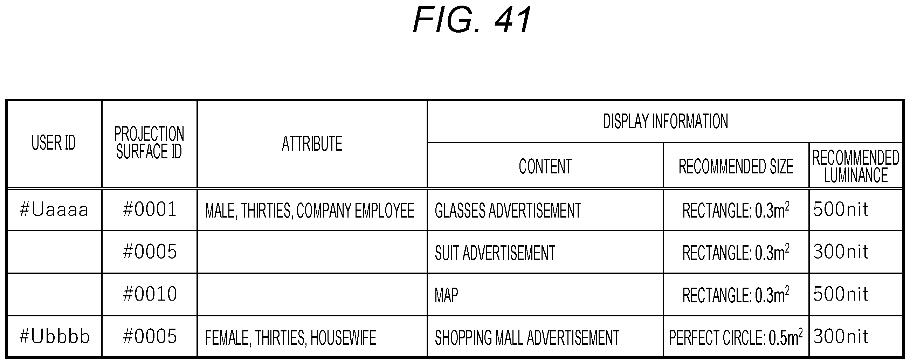

Fig. 41 illustrates an example of the user characteristic database constructed in the application "gaze region appreciation (coping with many people) in the CAVE system". However, the multi-plane display flag is TRUE, the recommended number of planes is five, and the maximum number of projection surfaces of the projection device 2910 is 10.

By performing content output control in the CAVE system 4000 on the basis of the user characteristic database as illustrated in Fig. 41, the projection system 2900 can simultaneously project each piece of content determined on the basis of the attributes of users 4001 and 4002 on projection surfaces 4011 and 4012 determined on the wall surfaces in the vicinity of the users 4001 and 4002 as illustrated in Fig. 40. In order to simplify the drawing, in the CAVE system 400 illustrated in Fig. 40, only two users are accommodated in the space, but even if a large number of users of three or more are accommodated, it is possible to similarly allocate a projection surface to each user and present individual content.

D-5. Example 5

An example of the CAVE system in which many people appreciate a video is described in the above section D-4, but an example in which the projection system 2900 is applied to the application "gaze region appreciation in the CAVE system (coping with energy saving on a single surface) " will be described in section D-5. Here, the CAVE system 4000 having the configuration illustrated in Fig. 40 is also assumed.

In a case where the projection system 4000 is applied to the application "gaze region appreciation (coping with energy-saving on a single surface) in the CAVE system", as illustrated in Fig. 30, the multi-plane display flag is designated as FALSE, the recommended number of planes is designated as one, and the multi-content flag is designated as FALSE.

Since the operations of the user information detection unit 2902 and the projection environment recognition unit 2903 are similar to those in section D-4 above, detailed description thereof will be omitted here.

Since the multi-content flag is designated as FALSE, the content selection unit 2904-1 selects content one by one for the target user. Furthermore, since the multi-plane display flag is designated as FALSE, the projection surface determination unit 2904-2 determines projection surfaces matching the recommended screen information of the content assigned to the target user one by one. Then, the information selected by the content selection unit 2904-1 and determined by the projection surface determination unit 2904-2 is stored in the user characteristic database.

As a result, since a single projection surface is allocated to each user accommodated in the space to perform video appreciation, energy saving of the CAVE system 4000 can be realized by suppressing the output of the projection device 2910 as compared with the above-described Example 4 in which a plurality of projection surfaces is allocated to each user.

D-6. Example 6

In section D-6, an example in which the projection system 2900 is applied to the application "touch indicator of the aerial display" will be described.

Here, the aerial display is a display device capable of stereoscopically displaying an image in an empty real space (air), and for example, one or a plurality of stationary projectors is used to form an image in the air by combining a lens, a half mirror, or the like, thereby displaying the image in the air (see, for example, Patent Document 3).

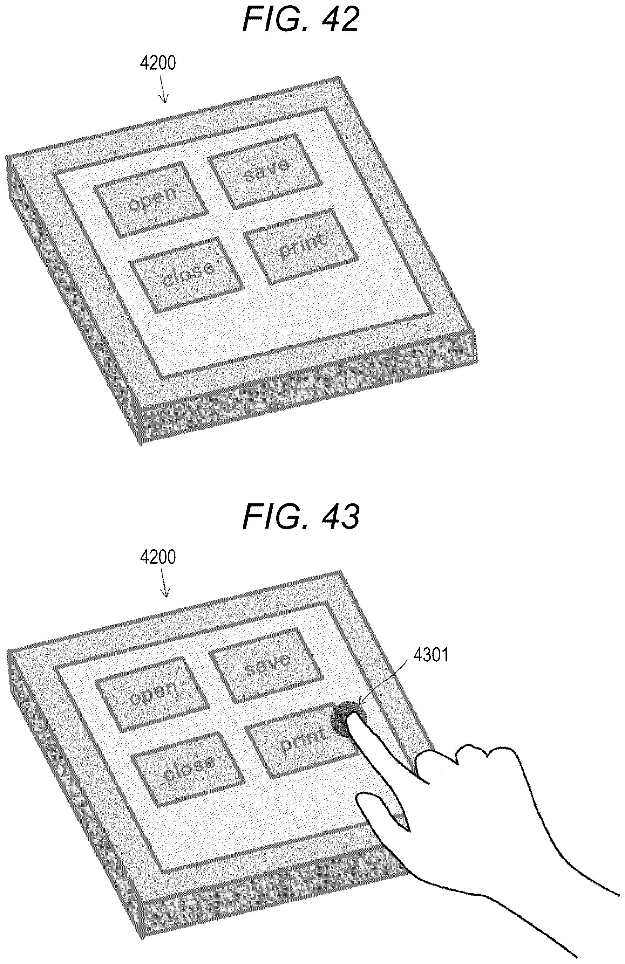

One application of the aerial display may include display of a user interface (UI) screen in an empty air, for example, for a user to operate a device. With the aerial display, the UI screen can be installed at any place without the need to install a real display device. Fig. 42 illustrates an example in which a UI screen 4200 including menu buttons for file operation such as open, close, save, and print is displayed on an aerial display. However, even if the user tries to touch the menu button on the UI screen displayed by the aerial display, since there is no entity that can be actually touched and operated, the user cannot obtain the tactile sensation of the fingertip touching the menu button, and thus the operation is difficult.

Therefore, an indicator indicating a distance between the aerial display UI screen and the fingertip to be touched is displayed using the projection system 2900, and the tactile sensation of the fingertip is compensated by visual information given by the indicator.

Specifically, a dark and small indicator is displayed when the distance of the user's fingertip with respect to the UI screen is long, and a bright and large indicator is displayed when the user's fingertip approaches the UI screen.

In a case where the projection system 2900 is applied to the application "touch indicator of the aerial display", as illustrated in Fig. 30, the multi-plane display flag is designated as TRUE, the recommended number of planes is designated as four, and the multi-content flag is designated as FALSE.

Since the operations of the user information detection unit 2902 and the projection environment recognition unit 2903 are similar to those in section D-4 above, detailed description thereof will be omitted here. Since the multi-content flag is designated as FALSE, the content selection unit 2904-1 selects a series of pieces of content to be assigned to the target user on the basis of the user information defined by the user definition unit 2902-1. Furthermore, the projection surface determination unit 2904-2 determines projection surfaces matching the recommended screen information of the content assigned to the target user one by one. Then, the information selected by the content selection unit 2904-1 and determined by the projection surface determination unit 2904-2 is stored in the user characteristic database.

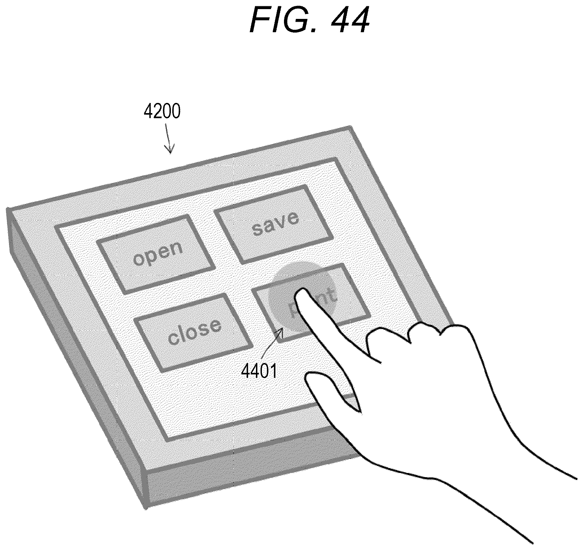

Figs. 43 and 44 illustrate an example in which the projection system 2900 is applied to the application "touch indicator of the aerial display". Fig. 43 illustrates a state in which a dark small indicator 4301 is displayed when the distance of the user's fingertip is long with respect to the UI screen 4200 illustrated in Fig. 42. Furthermore, Fig. 44 illustrates a state in which a bright and large indicator 4401 is displayed when the distance of the user's fingertip approaches the UI screen 4200. The user can grasp the sense of distance to the UI screen 4200 even if the user cannot obtain the tactile sensation of the UI screen 4200 on the basis of the visual information obtained from the indicators 4301 and 4401 illustrated in Figs. 43 and 44.

INDUSTRIAL APPLICABILITY

The present disclosure has been described in detail with reference to a specific embodiment. However, it is obvious that those skilled in the art can make modifications and substitutions of the embodiment without departing from the gist of the present disclosure.

In the present specification, the embodiment in which the projection system according to the present disclosure is applied to a vehicle or the like has been mainly described, but the gist of the present disclosure is not limited thereto.

Furthermore, the projection system according to the present disclosure basically uses the phase modulation type projection device to simultaneously project on a plurality of projection surfaces different in the vertical and horizontal directions and the depth direction. However, as long as there is no restriction such as space efficiency and energy efficiency, another type of projection device such as an amplitude modulation type projection device (even in the amplitude modulation scheme, display on a plurality of surfaces having different depths can be realized by the principle of holography) or a multi-projector can also be used.

In short, the present disclosure has been described in an illustrative manner, and the contents disclosed in the present specification should not be interpreted in a limited manner. To determine the gist of the present disclosure, the claims should be taken into consideration.

Note that the present disclosure may also have the following configurations.

(1) A projection system including:

a user recognition unit that recognizes a user existing in a space;
a projection environment recognition unit that recognizes a projection surface on which a video can be projected in the space; and
a control unit that controls a projection device so as to project a video on the projection surface recognized by the projection environment recognition unit for the user recognized by the user recognition unit.

(1-1) The projection system according to (1), in which

the space is a vehicle or another mobile device,
the user recognition unit recognizes a user inside and outside the mobile device, and
the projection environment recognition unit recognizes a projection surface inside and outside the mobile device.

(1-2) The projection system according to (1), in which

the space is surrounded by a wall, and

the projection environment recognition unit recognizes a projection surface from a wall surface surrounding the space.

(2) The projection system according to claim 1, in which

the projection device is capable of simultaneously projecting a video on a plurality of surfaces, and

the control unit controls a projection device so as to simultaneously project a video on two or more projection surfaces recognized by the projection environment recognition unit.

(3) The projection system according to (1) or (2), in which
at least one of the user recognition unit or the projection environment recognition unit performs recognition on the basis of sensor information detected by a sensor installed in the space.
(3-1) The projection system according to (3), in which
the sensor includes at least one of an image sensor, a depth sensor, a thermo camera, an ultrasonic sensor, or a touch sensor.
(4) The projection system according to any one of (1) to (3), in which
the projection environment recognition unit detects, as a projection surface, a region that satisfies a condition defined by one or more threshold values, such as an area equal to or larger than a predetermined threshold value, a curvature equal to or smaller than a predetermined threshold value, or a gradient equal to or larger than a predetermined threshold value, from a projectable range of the projection device.
(4-1) The projection system according to (4), in which
the threshold value is defined for each user, each piece of content to be projected, or each application to which the projection system is applied.
(5) The projection system according to any one of (1) to (4), in which

the projection device is capable of simultaneously projecting a video on a plurality of surfaces different in vertical and horizontal directions and a depth direction, and

the projection environment recognition unit recognizes a plurality of projection surfaces different in vertical and horizontal directions and a depth direction.

(6) The projection system according to (5), in which
the projection device is a projection device including a phase modulation type spatial light modulator.
(7) The projection system according to any one of (1) to (6), in which
the user recognition unit defines a characteristic and a state of a user.
(7-1) The projection system according to (7), in which
the user recognition unit detects at least one of the number of users, a position of the user, a direction of a face of the user, or a line-of-sight of the user, and defines a characteristic and a state of the user on the basis of the detection result.
(7-2) The projection system according to (7-1), in which
the user recognition unit recognizes a posture of a user from image information obtained by capturing the space with an RGB camera or a depth sensor, using a posture estimation model (Openpose).
(7-3) The projection system according to (7), in which
the user recognition unit defines an attribute (gender, age, occupation, or the like) of a user and a state (awakening or sleeping) of the user as user characteristic data.
(7-4) The projection system according to (7-3), in which
the user recognition unit defines an attribute of a user by associating stereotype information.
(7-5) The projection system according to (7-3), in which
the user recognition unit defines a state of a user on the basis of the number of blinks or movement of line-of-sight.
(7-6) The projection system according to (7), in which
the user recognition unit defines a characteristic or a state of a user on the basis of meta information possessed by a device possessed by the user.
(8) The projection system according to (7), further including
a content selection unit that selects content to be displayed to a user on the basis of defined user information.
(8-1) The projection system according to (8), in which
the content selection unit selects content on the basis of a predetermined priority.
(8-2) The projection system according to (8-1), in which
the priority is based on at least one of preference of a user, position information of the user, or current time.

(8-3) The projection system according to (8), in which
the selected content is associated with the user.

(8-4) The projection system according to (8), in which
the selected content and display information including a recommended size and recommended luminance of the selected content are associated with the user.

(9) The projection system according to (8), further including
a projection surface determination unit that determines a projection surface on which the selected content is projected.

(9-1) The projection system according to (9), in which
the projection surface determination unit determines whether or not there is a projection surface recognized by the projection environment recognition unit in a field of view of a user, and allocates a projection surface of the user on the basis of the determination result.

(9-2) The projection system according to (9), in which
the projection surface determination unit determines a projection surface on the basis of a predetermined priority.

(9-3) The projection system according to (9-2), in which
the priority includes at least one of an area of a projection surface, a size of an angle of view with respect to a user, a distance between the user and the projection surface, a degree of matching between the projection surface and a recommended screen size or a recommended angle of view of content selected by the user, a magnitude of contrast between a background of the projection surface and the content, or smallness of background luminance of the projection surface.

(9-4) The projection system according to (9), in which
the determined projection surface is associated with the user or the content.

(10) The projection system according to any one of (1) to (9), in which
the projection environment recognition unit further detects information of the recognized projection surface.

(11) The projection system according to (10), in which
the projection environment recognition unit defines an attribute, a shape, an area, and characteristics (reflectance, luminance, chromaticity) of a projection surface.

(11-1) The projection system according to (11), in which
the projection environment recognition unit calculates a shape, an area, and characteristics of a projection surface on the basis of sensor information detected by a sensor installed in the space.

(11-2) The projection system according to (11), in which
the projection environment recognition unit performs clustering of the projection surfaces on the basis of data of each projection surface.

(12) The projection system according to (9), further including
a projection parameter correction unit that corrects a projection parameter for the projection surface determined by the projection surface determination unit.

(13) The projection system according to (12), in which
the projection parameter correction unit limits at least one of a distance between projection surfaces different in a depth direction, the number of projection surfaces, or a projection size on the basis of a design value of the projection device.

(14) The projection system according to (12) or (13), in which
the projection parameter correction unit determines priorities of a plurality of the projection surfaces determined by the projection surface determination unit.

(15) The projection system according to any one of (12) to (14), in which
the projection parameter correction unit corrects at least one of luminance, chromaticity, or a size of a projected video on a projection surface.

(16) The projection system according to (3), in which

the sensor includes a microphone, and
the user recognition unit recognizes a state of a user on the basis of sound data, a conversation, or a daily life sound input from the microphone.

(17) The projection system according to (8) or (9), in which
the content selection unit selects content to be displayed to a user on the basis of user information recognized from meta information included in a device possessed by the user.

(18) The projection system according to any one of (1) to (17), further including

an application information accumulation unit that accumulates application information defining a display method for each application, in which

at least one of selection of content or determination of a projection surface is performed on the basis of the application information.

(19) The projection system according to (18), in which

the application information includes information indicating whether or not content can be displayed using a plurality of projection surfaces, a recommended number of projection surfaces, and whether or not content irrelevant to each projection surface can be displayed in a case where a plurality of projection surfaces is used.

(19-1) The projection system according to (19), in which

in a case of an application that permits use of a plurality of projection surfaces, a projection surface is allocated to a target user on the basis of a recommended number of projection surfaces so as not to exceed a maximum display number of projection surfaces of the projection device from among projection surfaces determined for the target user.

(19-2) The projection system according to (19), in which

in a case where the same projection surface is redundantly allocated to a plurality of users, if there is display information common to the users, the overlapping allocation of the projection surfaces is maintained.

(20) A projection control method including:

a user recognition step of recognizing a user existing in a space;

a projection environment recognition step of recognizing a projection surface on which a video can be projected in the space; and

a control step of controlling a projection device so as to project a video on the projection surface recognized by the projection environment recognition step for the user recognized by the user recognition step.

REFERENCE SIGNS LIST

| | |
|---|---|
| 100 | Projection system |
| 101 | User recognition unit |
| 102 | Projection environment recognition unit |
| 103 | Output control unit |
| 110 | Projection device |
| 200 | Projection system |
| 201 | Input unit |
| 202 | User recognition unit |
| 203 | Projection environment recognition unit |
| 203-1 | Projection surface detection unit |
| 204 | Output control unit |
| 210 | Projection device |
| 701 | Phase modulation type SLM |
| 800 | Projection system |
| 801 | Input unit |
| 802 | User information detection unit |
| 802-1 | User recognition unit |
| 802-2 | User definition unit |
| 803 | Projection environment recognition unit |
| 803-1 | Projection surface detection unit |
| 804 | Output control unit |
| 810 | Projection device |
| 1200 | Projection system |
| 1201 | Input unit |
| 1202 | User information detection unit |
| 1202-1 | User recognition unit |
| 1202-2 | User definition unit |
| 1203 | Projection environment recognition unit |
| 1203-1 | Projection surface detection unit |
| 1204 | Output control unit |
| 1204-1 | Content selection unit |
| 1204-2 | Projection surface determination unit |

| | |
|---|---|
| 1210 | Projection device |
| 1600 | Projection system |
| 1601 | Input unit |
| 1602 | User information detection unit |
| 1602-1 | User recognition unit |
| 1602-2 | User definition unit |
| 1603 | Projection environment recognition unit |
| 1603-1 | Projection surface detection unit |
| 1603-2 | Projection surface definition unit |
| 1604 | Output control unit |
| 1604-1 | Content selection unit |
| 1604-2 | Projection surface determination unit |
| 1605 | Projection parameter correction unit |
| 1610 | Projection device |
| 2900 | Projection system |
| 2901 | Input unit |
| 2902 | User information detection unit |
| 2902-1 | User recognition unit |
| 2902-2 | User definition unit |
| 2903 | Projection environment recognition unit |
| 2903-1 | Projection surface detection unit |
| 2903-2 | Projection surface definition unit |
| 2904 | Output control unit |
| 2904-1 | Content selection unit |
| 2904-2 | Projection surface determination unit |
| 2905 | Projection parameter correction unit |
| 2906 | Application information accumulation unit |
| 2910 | Projection device |
| 3101 | Sensor |
| 4000 | CAVE system |

**Claims**

1. A projection system comprising:

   a user recognition unit that recognizes a user existing in a space;
   a projection environment recognition unit that recognizes a projection surface on which a video can be projected in the space; and
   a control unit that controls a projection device so as to project a video on the projection surface recognized by the projection environment recognition unit for the user recognized by the user recognition unit.

2. The projection system according to claim 1, wherein

   the projection device is capable of simultaneously projecting a video on a plurality of surfaces, and
   the control unit controls a projection device so as to simultaneously project a video on two or more projection surfaces recognized by the projection environment recognition unit.

3. The projection system according to claim 1, wherein
   at least one of the user recognition unit or the projection environment recognition unit performs recognition on a basis of sensor information detected by a sensor installed in the space.

4. The projection system according to claim 1, wherein
   the projection environment recognition unit detects, as a projection surface, a region that satisfies a condition defined by one or more threshold values, such as an area equal to or larger than a predetermined threshold value, a curvature equal to or smaller than a predetermined threshold value, or a gradient equal to or larger than a predetermined threshold value, from a projectable range of the projection device.

5. The projection system according to claim 1, wherein

   the projection device is capable of simultaneously projecting a video on a plurality of surfaces different in vertical and horizontal directions and a depth direction, and
   the projection environment recognition unit recognizes a plurality of projection surfaces different in vertical and horizontal directions and a depth direction.

6. The projection system according to claim 5, wherein
   the projection device is a projection device including a phase modulation type spatial light modulator.

7. The projection system according to claim 1, wherein
   the user recognition unit defines a characteristic and a state of a user.

8. The projection system according to claim 7, further comprising
   a content selection unit that selects content to be displayed to a user on a basis of defined user information.

9. The projection system according to claim 8, further comprising
   a projection surface determination unit that determines a projection surface on which the selected content is projected.

10. The projection system according to claim 1, wherein
    the projection environment recognition unit further detects information of the recognized projection surface.

11. The projection system according to claim 10, wherein
    the projection environment recognition unit defines an attribute, a shape, an area, and characteristics (reflectance, luminance, chromaticity) of a projection surface.

12. The projection system according to claim 9, further comprising
    a projection parameter correction unit that corrects a projection parameter for the projection surface determined by the projection surface determination unit.

13. The projection system according to claim 12, wherein
    the projection parameter correction unit limits at least one of a distance between projection surfaces different in a depth direction, the number of projection surfaces, or a projection size on a basis of a design value of the projection device.

14. The projection system according to claim 12, wherein
    the projection parameter correction unit determines priorities of a plurality of the projection surfaces determined by the projection surface determination unit.

15. The projection system according to claim 12, wherein
    the projection parameter correction unit corrects at least one of luminance, chromaticity, or a size of a projected video on a projection surface.

16. The projection system according to claim 3, wherein

    the sensor includes a microphone, and
    the user recognition unit recognizes a state of a user on a basis of sound data, a conversation, or a daily life sound input from the microphone.

17. The projection system according to claim 8 or 9, wherein
    the content selection unit selects content to be displayed to a user on a basis of user information recognized from meta information included in a device possessed by the user.

18. The projection system according to claim 1, further comprising

    an application information accumulation unit that accumulates application information defining a display method for each application, wherein
    at least one of selection of content or determination of a projection surface is performed on a basis of the application information.

19. The projection system according to claim 18, wherein
the application information includes information indicating whether or not content can be displayed using a plurality of projection surfaces, a recommended number of projection surfaces, and whether or not content irrelevant to each projection surface can be displayed in a case where a plurality of projection surfaces is used.

20. A projection control method comprising:

a user recognition step of recognizing a user existing in a space;
a projection environment recognition step of recognizing a projection surface on which a video can be projected in the space; and
a control step of controlling a projection device so as to project a video on the projection surface recognized by the projection environment recognition step for the user recognized by the user recognition step.

# FIG. 1

PROJECTION SYSTEM **100**

USER RECOGNITION UNIT
101

PROJECTION ENVIRONMENT
RECOGNITION UNIT
102

OUTPUT CONTROL UNIT
103

PROJECTION DEVICE
110

FIRST
PROJECTION SURFACE
$(x1, y1, z1)$

SECOND
PROJECTION SURFACE
$(x2, y2, z2)$

EP 4 447 431 A1

# FIG. 2

PROJECTION SYSTEM  200

USER RECOGNITION UNIT
202

INPUT UNIT
201

PROJECTION ENVIRONMENT
RECOGNITION UNIT
203

PROJECTION SURFACE
DETECTION UNIT
203-1

OUTPUT CONTROL UNIT
204

PROJECTION DEVICE
210

FIRST
PROJECTION SURFACE
(x1, y1, z1)

SECOND
PROJECTION SURFACE
(x2, y2, z2)

EP 4 447 431 A1

## FIG. 3

## FIG. 4

## FIG. 5

## FIG. 6

# FIG. 7

PROJECTION DEVICE 110

PHASE MODULATION TYPE SLM 701

$(x,y,x) = (x1,y1,z1)$

$(x,y,x) = (x1,y1,z1)$

# FIG. 8

## FIG. 9

## FIG. 10

# FIG. 11

| USER | CHARACTERISTIC | STATE | INFORMATION DISPLAY |
|------|---------------|-------|---------------------|
| user1 | MALE, THIRTIES, COMPANY EMPLOYEE | DRIVING | No |
| user2 | FEMALE, THIRTIES, HOUSEWIFE | WAKING UP | Yes |
| user3 | INFANT | WAKING UP | No |
| user4 | FEMALE, TWENTIES, UNDERGRADUATE | WAKING UP, WAITING AT TRAFFIC LIGHT | Yes |

# FIG. 12

EP 4 447 431 A1

## FIG. 13

## FIG. 14

## FIG. 15

| USER | CHARACTERISTIC | STATE | INFORMATION DISPLAY | CONTENT | PROJECTION SURFACE |
|---|---|---|---|---|---|
| user2 | FEMALE, THIRTIES, HOUSEWIFE | WAKING UP | Yes | OKINAWA RESORT ADVERTISEMENT | #009 |
| | | | | NEWS | #009 |
| | | | | MAP | #003 |
| user4 | FEMALE, TWENTIES, UNDERGRADUATE | WAITING AT TRAFFIC LIGHT | Yes | SHOPPING MALL ADVERTISEMENT | #101 |

EP 4 447 431 A1

# FIG. 16

PROJECTION SYSTEM 1600

USER INFORMATION
DETECTION UNIT
1602

USER RECOGNITION UNIT
1602-1

USER DEFINITION UNIT
1602-2

INPUT UNIT
1601

PROJECTION ENVIRONMENT
RECOGNITION UNIT
1603

PROJECTION SURFACE
DETECTION UNIT
1603-1

PROJECTION SURFACE
DEFINITION UNIT
1603-2

OUTPUT CONTROL UNIT
1604

CONTENT SELECTION UNIT
1604-1

PROJECTION SURFACE
DETERMINATION UNIT
1604-2

PROJECTION PARAMETER
CORRECTION UNIT
1605

PROJECTION DEVICE
1610

FIRST
PROJECTION SURFACE
(x1, y1, z1)

SECOND
PROJECTION SURFACE
(x2, y2, z2)

## FIG. 17

| PROJECTION SURFACE | ATTRIBUTE | SHAPE | AREA | REFLECTANCE | LUMINANCE | CHROMATICITY |
|---|---|---|---|---|---|---|
| #001 | SYNTHETIC LEATHER | PLANE SURFACE | 1 m² | 0.2 | 52nit | (x,y)=(0.220,0.400) |
| #002 | SYNTHETIC LEATHER | CURVED SURFACE | 0.5 m² | 0.5 | 80nit | (x,y)=(0.220,0.420) |
| ... | ... | ... | ... | ... | ... | ... |
| #101 | ASPHALT | PLANE SURFACE | 0.02 m² | 0.8 | 5000nit | (x,y)=(0.220,0.280) |

# FIG. 18

| PROJECTION SURFACE | ATTRIBUTE | SHAPE | AREA | REFLECTANCE | LUMINANCE | CHROMATICITY |
|---|---|---|---|---|---|---|
| #001 | SYNTHETIC LEATHER (CAPROIC) | PLANE SURFACE | 1 m² | 0.5 | 52nit | (x,y)= (0.220,0.220) |
| #002 | SYNTHETIC LEATHER (CAPROIC) | CURVED SURFACE | 0.25 m² | 0.5 | 80nit | (x,y)= (0.220,0.220) |
| #003 | WINDOW | PLANE SURFACE | 0.5 m² | 0.7 | 10000 nit | (x,y)= (0.150,0.280) |
| #004 | SYNTHETIC LEATHER (MOQUETTE) | CURVED SURFACE | 0.25 m² | 0.3 | 100nit | (x,y)= (0.330,0.330) |

# FIG. 19

| PROJECTION SURFACE | ATTRIBUTE | SHAPE | AREA | REFLECTANCE | LUMINANCE | CHROMATICITY |
|---|---|---|---|---|---|---|
| #001 | SYNTHETIC LEATHER (CAPROIC) | PLANE SURFACE | $1\,m^2$ | 0.5 | 10nit | $(x,y)=$ $(0.150,0.150)$ |
| #002 | SYNTHETIC LEATHER (CAPROIC) | CURVED SURFACE | $0.25\,m^2$ | 0.5 | 10nit | $(x,y)=$ $(0.150,0.150)$ |
| #003 | WINDOW | PLANE SURFACE | $0.5\,m^2$ | 0.7 | 20nit | $(x,y)=$ $(0.150,0.150)$ |
| #004 | SYNTHETIC LEATHER (MOQUETTE) | CURVED SURFACE | $0.25\,m^2$ | 0.3 | 10nit | $(x,y)=$ $(0.150,0.150)$ |

# FIG. 20

WINDOW WALL
SURFACE SURFACE

PROJECTION
DEVICE
1610

ABC

DEF

NEWS FOR
INSIDE OF VEHICLE
BRIGHTNESS: 100%

ADVERTISEMENT FOR
OUTSIDE OF VEHICLE
BRIGHTNESS: 0%

# FIG. 21

WALL
SURFACE

49

# FIG. 22

WALL
SURFACE

# FIG. 23

WINDOW
SURFACE

WALL
SURFACE

PROJECTION
DEVICE
1610

ABC

NEWS FOR
INSIDE OF VEHICLE
BRIGHTNESS: 20%

DEF

ADVERTISEMENT FOR
OUTSIDE OF VEHICLE
BRIGHTNESS: 80%

# FIG. 24

# FIG. 25

FIG. 26

FIG. 27

# FIG. 28

FIG. 29

PROJECTION SYSTEM 2900

USER INFORMATION DETECTION UNIT 2902

USER RECOGNITION UNIT 2902-1

USER DEFINITION UNIT 2902-2

INPUT UNIT 2901

PROJECTION ENVIRONMENT RECOGNITION UNIT 2903

PROJECTION SURFACE DETECTION UNIT 2903-1

PROJECTION SURFACE DEFINITION UNIT 2903-2

OUTPUT CONTROL UNIT 2904

CONTENT SELECTION UNIT 2904-1

PROJECTION SURFACE DETERMINATION UNIT 2904-2

APPLICATION INFORMATION ACCUMULATION UNIT 2906

PROJECTION PARAMETER CORRECTION UNIT 2905

PROJECTION DEVICE 2910

FIRST PROJECTION SURFACE (x1, y1, z1)

SECOND PROJECTION SURFACE (x2, y2, z2)

EP 4 447 431 A1

## FIG. 30

| APPLICATION NAME | MULTI-PLANE DISPLAY FLAG | RECOMMENDED NUMBER OF PLANES | MULTI-CONTENT FLAG |
|---|---|---|---|
| ADVERTISEMENT PROJECTION FOR INSIDE AND OUTSIDE OF VEHICLE | FALSE | 1 | FALSE |
| MULTIPLE SURFACE PROJECTION INSIDE VEHICLE (HEADREST, CEILING, PILLAR, OR THE LIKE) | TRUE | 4 | TRUE |
| DISH PROJECTION MAPPING | TRUE | 3 | FALSE |
| PROJECTION MAPPING EVENT (FASHION SHOW, BOWLING) | TRUE | 7 | FALSE |
| GAZE REGION APPRECIATION IN CAVE SYSTEM (COPING WITH MANY PEOPLE) | TRUE | 5 | TRUE |
| GAZE REGION APPRECIATION IN CAVE SYSTEM (COPING WITH ENERGY SAVING ON SINGLE SURFACE) | FALSE | 1 | FALSE |
| TOUCH INDICATOR OF AERIAL DISPLAY | TRUE | 4 | FALSE |
| STRUCTURED LIGHT SOURCE SYSTEM | TRUE | 10 | FALSE |

# FIG. 31

2910

3101

# FIG. 32

| USER ID | PROJECTION SURFACE ID | ATTRIBUTE | DISPLAY INFORMATION | | |
|---|---|---|---|---|---|
| | | | CONTENT | RECOMMENDED SIZE | RECOMMENDED LUMINANCE |
| #Uaaaa | #0001 | MALE, THIRTIES, COMPANY EMPLOYEE | GLASSES ADVERTISEMENT | RECTANGLE: $0.3m^2$ | 500nit |
| | #0005 | | SUIT ADVERTISEMENT | RECTANGLE: $0.3m^2$ | 300nit |
| | #0010 | | MAP | RECTANGLE: $0.3m^2$ | 500nit |
| #Ubbbb | #0005 | FEMALE, THIRTIES, HOUSEWIFE | SHOPPING MALL ADVERTISEMENT | PERFECT CIRCLE: $0.5m^2$ | 300nit |

## FIG. 33A

3301

3302

3303

## FIG. 33B

RABBIT CAFE a-1

RABBIT CAFE a-2

RABBIT CAFE a-3

# FIG. 33C

RABBIT CAFE a-3

RABBIT CAFE a-1

RABBIT CAFE a-2

## FIG. 34

| USER ID | PROJECTION SURFACE ID | ATTRIBUTE | DISPLAY INFORMATION | | |
|---|---|---|---|---|---|
| | | | CONTENT | RECOMMENDED SIZE | RECOMMENDED LUMINANCE |
| #Uaaaa | #0001 | FEMALE, TWENTIES, EMPLOYED PERSON | RABBIT CAFE (a-1) | 0.02㎡ | 200nit |
| | #0005 | | RABBIT CAFE (a-2) | 0.03㎡ | 200nit |
| | #0010 | | RABBIT CAFE (a-3) | 0.08㎡ | 200nit |
| | | | RABBIT CAFE (b-1) | 0.02㎡ | 200nit |
| | | | RABBIT CAFE (b-2) | 0.03㎡ | 200nit |
| | | | RABBIT CAFE (b-3) | 0.08㎡ | 200nit |

## FIG. 35

| USER ID | PROJECTION SURFACE ID | ATTRIBUTE | DISPLAY INFORMATION | | |
|---|---|---|---|---|---|
| | | | CONTENT | RECOMMENDED SIZE | RECOMMENDED LUMINANCE |
| #Uaaaa | #0001 | FEMALE, TWENTIES, EMPLOYED PERSON | RABBIT CAFE (a-1) | 0.02㎡ | 200nit |
| | #0005 | | RABBIT CAFE (a-3) | 0.03㎡ | 200nit |
| | #0010 | | RABBIT CAFE (a-2) | 0.03㎡ | 200nit |

## FIG. 36

## FIG. 37

| USER ID | PROJECTION SURFACE ID | ATTRIBUTE | DISPLAY INFORMATION | | |
| --- | --- | --- | --- | --- | --- |
| | | | CONTENT | RECOMMENDED SIZE | RECOMMENDED LUMINANCE |
| #Uaaaa | #0001 | MALE, SIXTIES, AMATEUR BOWLER | BOWLING (a-1) | 0.01 | 200nit |
| | #0005 | | BOWLING (a-2) | 1 | 200nit |
| | #0006 | | BOWLING (a-3) | 1 | 200nit |
| | #0007 | | BOWLING (a-4) | 1 | 200nit |
| | #0008 | | BOWLING (a-5) | 1 | 200nit |
| | #0010 | | BOWLING (a-6) | 8 | 500nit |
| | #0021 | | SLOT (a-1) | 0.05 | 500nit |
| | #0025 | | SLOT (a-1) | 0.05 | 500nit |
| #Ubbbb | #0005 | FEMALE, THIRTIES, HOUSEWIFE | ○○ CAFE (a-1) | 0.03 | 200nit |
| | | | ○○ CAFE (a-1) | 0.03 | 200nit |

## FIG. 38

3801

## FIG. 39

3904
3903
3902
3901

## FIG. 40

## FIG. 41

| USER ID | PROJECTION SURFACE ID | ATTRIBUTE | DISPLAY INFORMATION | | |
| --- | --- | --- | --- | --- | --- |
| | | | CONTENT | RECOMMENDED SIZE | RECOMMENDED LUMINANCE |
| #Uaaaa | #0001 | MALE, THIRTIES, COMPANY EMPLOYEE | GLASSES ADVERTISEMENT | RECTANGLE: $0.3m^2$ | 500nit |
| | #0005 | | SUIT ADVERTISEMENT | RECTANGLE: $0.3m^2$ | 300nit |
| | #0010 | | MAP | RECTANGLE: $0.3m^2$ | 500nit |
| #Ubbbb | #0005 | FEMALE, THIRTIES, HOUSEWIFE | SHOPPING MALL ADVERTISEMENT | PERFECT CIRCLE: $0.5m^2$ | 300nit |

# FIG. 42

4200

# FIG. 43

4200

4301

# FIG. 44

4200

open

save

close

print

4401

# FIG. 45

CALCULATION (VIRTUAL SPACE)
SYNTHESIZE WAVEFRONT OF O1, O2 AT
ZERO POSITION (= SLM PLANE)

O(x,y)

O1(x1,y1)

O2(x2,y2)

SLM PLANE
(VIRTUAL)

0                                    r1        r2

## FIG. 46

REPRODUCTION (REAL SPACE)
DISPLAY PHASE INFORMATION ON SLM PLANE, AND REPRODUCE O1, O2
BY COLLIMATED REPRODUCTION LIGHT BEING INCIDENT

O1´(x1,y1)

O2´(x2,y2)

SLM PLANE
(REAL)

0                    r1            r2

V1 — ABC        DEF — V2

EP 4 447 431 A1

## INTERNATIONAL SEARCH REPORT

| International application No. |
|---|
| **PCT/JP2022/038284** |

**A.    CLASSIFICATION OF SUBJECT MATTER**

*H04N 5/74*(2006.01)i
FI:    H04N5/74 Z

According to International Patent Classification (IPC) or to both national classification and IPC

**B.    FIELDS SEARCHED**

Minimum documentation searched (classification system followed by classification symbols)

H04N5/74; H04N9/31

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2016/125359 A1 (SONY CORP) 11 August 2016 (2016-08-11)<br>    paragraphs [0026]-[0027], [0030], [0058], [0065], [0067], [0073], [0075], [0081]-[0084],<br>    [0096]-[0100], [0106], [0108]-[0109], [0119], fig. 5, 7-8, 11, 14 | 1-5, 7, 10-11, 16, 18, 20 |
| Y | | 6, 8-9, 12-15, 17 |
| A | | 19 |
| Y | WO 2018/056194 A1 (NEC CORPORATION) 29 March 2018 (2018-03-29)<br>    paragraphs [0027], [0065]-[0066], [0078]-[0079], fig. 1-10 | 6, 8-9, 12-15, 17 |
| A | | 19 |
| Y | JP 2017-123120 A (NIHON UNISYS LTD) 13 July 2017 (2017-07-13)<br>    paragraphs [0028]-[0030], [0041], fig. 1 | 8-9, 12-15, 17 |
| A | | 19 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/038284**

| Patent document cited in search report | | | Publication date (day/month/year) | Patent family member(s) | | | Publication date (day/month/year) |
|---|---|---|---|---|---|---|---|
| WO | 2016/125359 | A1 | 11 August 2016 | US | 2017/0330495 | A1 | |
| | | | | paragraphs [0051]-[0052], [0055], [0083], [0090], [0092], [0098], [0100], [0106]-[0109], [0121]-[0125], [0131], [0133]-[0134], [0144], fig. 5, 7-8, 11, 14 | | | |
| | | | | EP | 3255880 | A1 | |
| | | | | CN | 107211104 | A | |
| WO | 2018/056194 | A1 | 29 March 2018 | US | 2020/0021786 | A1 | |
| | | | | paragraphs [0071], [0111]-[0112], [0124]-[0125], fig. 1-10 | | | |
| JP | 2017-123120 | A | 13 July 2017 | (Family: none) | | | |

Form PCT/ISA/210 (patent family annex) (January 2015)

**EP 4 447 431 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011244044 A
- JP 2020112674 A
- JP 2019139308 A